# EUROPEAN PATENT APPLICATION

(11) **EP 4 601 308 A1**
(43) Date of publication of application: **13.08.2025**
(21) Application number: 22961339.3
(22) Date of filing: 03.10.2022
(51) Int. Cl.: H04N 23/60, G06T 7/593

(54) **CAMERA SYSTEM**

(71) Applicant: Astemo, Ltd., Tokyo 100-0004 (JP)
(72) Inventor: IRIE Kota, Hitachinaka-shi, Ibaraki 312-8503 (JP); KURODA Masayoshi, Hitachinaka-shi, Ibaraki 312-8503 (JP); YASUKAWA Takakiyo, Hitachinaka-shi, Ibaraki 312-8503 (JP); SAI Hirotomo, Hitachinaka-shi, Ibaraki 312-8503 (JP)
(74) Representative: MERH-IP Matias Erny Reichl Hoffmann Patentanwälte PartG mbB
(86) International application number: PCT/JP2022/036918
(87) International publication number: WO 2024/075147

(57) **Abstract**

A camera system includes a first camera group that includes a plurality of cameras disposed to be capable of imaging an outside of an entire periphery continuous in at least one direction around a host vehicle, a second camera group that includes the plurality of cameras disposed to be capable of imaging the outside of the entire periphery continuous in at least one direction around the host vehicle, and disposed so as to have a stereo region that is an imaging visual field that overlaps at least an imaging visual field of the first camera group, and a stereo matching processing unit that performs stereo matching processing to obtain parallax information using images captured by the first camera group and images captured by the second camera group.

## Description

### Technical Field

The present invention relates to a camera system that is mounted on a vehicle and images an entire periphery.

### Background Art

In automatic driving of a vehicle, the entire periphery of the vehicle is sensed by a camera mounted on the vehicle, and highly accurate and high-density distance information is required.

In this regard, PTL 1 proposes "an imaging control device including a detection unit that detects a distance of an observation point in a detection range around a vehicle and a correction unit that corrects the distance of the detected observation point on a basis of overlapping of the observation points, the overlapping being an overlapping of error ranges of the distances of the observation points in a plurality of the detection ranges corresponding to a plurality of the detection units, in which when a plurality of overlapping of the observation points are detected, the correction unit corrects the distance of the detected observation point on a basis of overlapping of the observation points close to the vehicle or overlapping of the observation points close to the observation points" for the purpose of improving distance measurement accuracy.

### Citation List

### Patent Literature

PTL 1: Japanese Patent No. 6819681

### Summary of Invention

### Technical Problem

According to PTL 1, a configuration in which ultra-wide-angle cameras are attached to four sides of a vehicle and a configuration in which wide-angle stereo cameras are attached to four sides of a vehicle are adopted.

In the case of stereo vision using this ultra-wide-angle camera, there are problems such as degradation of stereo matching accuracy due to a wide optical axis difference between cameras constituting the stereo vision, degradation of stereo matching accuracy at a visual field end or a distant place due to lens distortion, and an increase in shielding (blind spot) due to vehicle reflection.

In addition, in the case of the configuration in which the wide-angle stereo cameras are disposed on the four sides of the vehicle, there are problems such as a decrease in stereo matching accuracy at the visual field end, a problem of designability (low degree of freedom of mounting the product), and an increase in cost.

From the above, an object of the present invention is to provide a camera system capable of forming a plurality of stereo-vision camera pairs in an overlapping region of a plurality of cameras and acquiring distance information of the entire periphery.

### Solution to Problem

From the above, in one aspect of the present invention, "a camera system includes: a first camera group that includes a plurality of cameras disposed to be capable of imaging an outside of an entire periphery continuous in at least one direction around a host vehicle; a second camera group that includes a plurality of cameras disposed to be capable of imaging the outside of the entire periphery continuous in at least one direction around the host vehicle, and disposed so as to have a stereo region that is an imaging visual field that overlaps at least an imaging visual field of the first camera group; and a stereo matching processing unit that performs stereo matching processing to obtain parallax information using images captured by the first camera group and images captured by the second camera group".

### Advantageous Effects of Invention

According to the present invention, it is possible to provide a camera system capable of forming a plurality of stereo-vision camera pairs in an overlapping region of a plurality of cameras and acquiring distance information of the entire periphery.

Problems, configurations, and effects other than those described above will be clarified by the following description of embodiments.

### Brief Description of Drawings

[FIG. 1] FIG. 1 is a diagram illustrating a first assumed example for clarifying a problem in measuring a distance in an entire periphery without discontinuity.
[FIG. 2] FIG. 2 is a diagram illustrating a second assumed example for clarifying a problem in measuring a distance in the entire periphery without discontinuity.
[FIG. 3] FIG. 3 is a diagram illustrating a third assumed example for clarifying a problem in measuring a distance in the entire periphery without discontinuity.
[FIG. 4] FIG. 4 is a diagram illustrating a basic idea of camera disposition of the present invention.
[FIG. 5] FIG. 5 is a diagram illustrating a basic idea of a stereo region of the present invention.
[FIG. 6] FIG. 6 is a diagram illustrating a configuration example of a 360-degree multi-stereo camera system 1 including six cameras.
[FIG. 7] FIG. 7 is a diagram illustrating a configuration example of a 360-degree multi-stereo camera system 2 including six cameras.
[FIG. 8] FIG. 8 is a diagram illustrating a configuration example of a 360-degree multi-stereo camera system 1 including seven cameras.
[FIG. 9] FIG. 9 is a diagram illustrating a configuration example of a 360-degree multi-stereo camera system 2 including seven cameras.
[FIG. 10] FIG. 10 is an enlarged diagram of a region by the 360-degree multi-stereo camera system in FIG. 7.
[FIG. 11] FIG. 11 is a diagram illustrating a configuration example of a 360-degree multi-stereo camera system including 10 cameras.
[FIG. 12] FIG. 12 is a diagram summarizing concepts of FIGS. 11 and 13.
[FIG. 13] FIG. 13 is a diagram illustrating a configuration example in which two camera groups of four cameras are combined.
[FIG. 14] FIG. 14 is a diagram illustrating a disposition example in a concept of placing emphasis on the rear.
[FIG. 15] FIG. 15 is a diagram illustrating a disposition example in a concept of placing emphasis on cost.
[FIG. 16] FIG. 16 is a diagram illustrating another disposition example.
[FIG. 17] FIG. 17 is a diagram summarizing the correspondence according to a second embodiment.
[FIG. 18] FIG. 18 is a diagram illustrating a configuration example of an in-vehicle imaging device 10 that processes image information from a plurality of cameras.
[FIG. 19] FIG. 19 is a diagram illustrating the configuration example of the in-vehicle imaging device 10 that processes the image information from the plurality of cameras.
[FIG. 20] FIG. 20 is a diagram illustrating an example of a priority reference in a case where stereo regions overlap.
[FIG. 21] FIG. 21 is a diagram illustrating a concept of a priority reference 1.
[FIG. 22] FIG. 22 is a diagram illustrating a concept of a priority reference 2.
[FIG. 23] FIG. 23 is a diagram illustrating a concept of a priority reference 3.
[FIG. 24] FIG. 24 is a diagram illustrating a concept of a priority reference 4.
[FIG. 25] FIG. 25 is a diagram illustrating a concept of a priority reference 5.
[FIG. 26] FIG. 26 is a diagram illustrating a concept of a priority reference 6.
[FIG. 27] FIG. 27 is a diagram illustrating devised points for obtaining high-precision parallax information.
[FIG. 28] FIG. 28 is a diagram illustrating a processing content of a stereo matching priority determination unit 15 in FIGS. 18 and 19.
[FIG. 29] FIG. 29 is a diagram illustrating a configuration example in which four cameras on front, rear, right, and left are added to a camera group A.
[FIG. 30] FIG. 30 is a diagram illustrating a configuration example in which four cameras on front, rear, right, and left are added to a camera group A1.
[FIG. 31] FIG. 31 is a diagram illustrating a configuration example in which four cameras on front, rear, right, and left are added to a camera group A2.
[FIG. 32] FIG. 32 is a diagram illustrating a four-side camera disposition of a vehicle in a 12-unit configuration in which front, rear, right, and left cameras are added to the camera group A2.
[FIG. 33] FIG. 33 is a diagram illustrating a four-side camera disposition of a vehicle in a 10-unit configuration in which front, rear, right, and left cameras are added to the camera group A.
[FIG. 34] FIG. 34 is a diagram illustrating the four-side camera disposition of the vehicle in the camera group A2.
[FIG. 35] FIG. 35 is a diagram illustrating the four-side camera disposition of the vehicle in the camera group A1.

### Description of Embodiments

Hereinafter, embodiments of the present invention will be described.

### First Embodiment

In a first embodiment, a description will be given of configuring a plurality of stereo-vision camera pairs in an overlapping region of visual fields of a plurality of cameras and measuring a distance of the entire periphery without any discontinuity in acquiring distance information of the entire periphery.

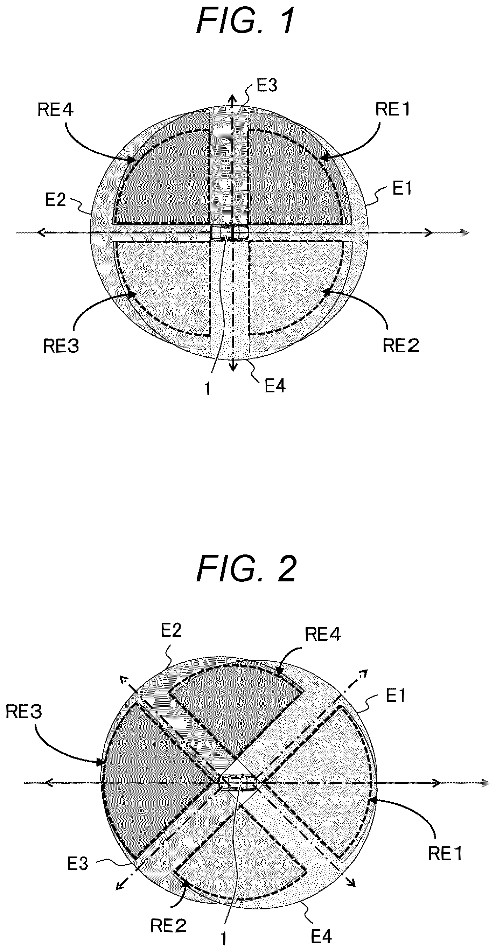

However, here, before describing the embodiments of the present invention, some assumed examples will be examined, and a problem in measuring the distance of the entire periphery without discontinuity will be clarified. FIGS. 1 and 2 illustrate assumed examples 1 and 2, and illustrate a case where cameras of fisheye cameras (HFOV 180 degrees or more) are disposed in four directions such as front, rear, right, and left of a vehicle 1 to form a surround camera system that monitors the entire periphery (range of 360-degrees in the horizontal direction) of the vehicle.

FIG. 1 illustrates an example in which fisheye cameras are disposed in four directions of front, rear, right, and left of the vehicle 1, and the monitoring regions E of the respective cameras are formed in a front E1, a rear E2, a left E3, and a right E4. Therefore, regions (stereo regions RE1, RE2, RE3, RE4) in which regions RE of the cameras overlap to form the stereo visual field are four oblique directions with respect to the vehicle.

FIG. 2 illustrates an example in which fisheye cameras are disposed in four directions at four corners of the vehicle 1, and the monitoring regions E of the respective cameras are formed in a left front E1, a right rear E2, a left rear E3, and a right front E4. Therefore, regions where the regions E (stereo regions RE1, RE2, RE3, RE4) of the cameras overlap to form a stereo visual field are four directions of front, rear, right, and left with respect to the vehicle 1.

The following can be understood from the disposition examples of FIGS. 1 and 2. First, as a first point, since a gap corresponding to the entire width and the entire length of the vehicle 1 is formed in four directions as a stereo region, a blind spot region of a stereo visual field occurs. As a second point, since an optical axis angle difference between the cameras forming the stereo region is wide (90 degrees), the accuracy of stereo matching is degraded. In other words, stereo matching is difficult because the optical axis directions are greatly different between the two cameras constituting the stereo pair. As a third point, since the stereo region includes the region at the end of the image of the ultra-wide-angle camera, there is a problem that the influence of distortion and chromatic aberration is large and the distance measurement accuracy is deteriorated.

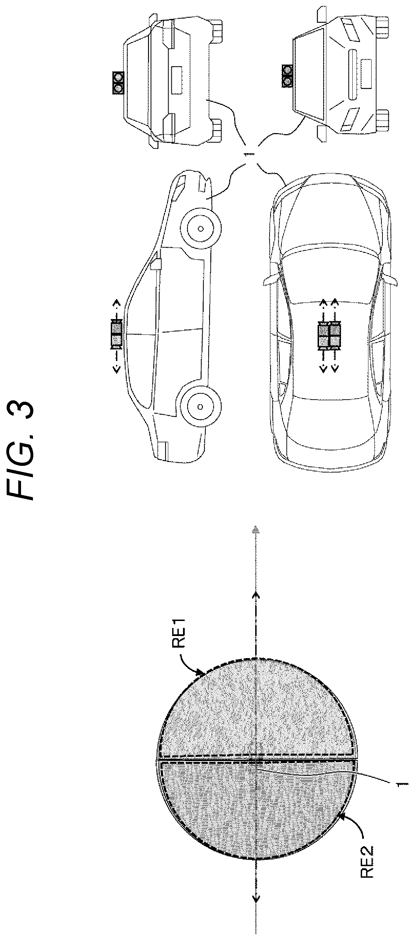

FIG. 3 illustrates a third assumed example, and illustrates a four-view diagram (front and rear surfaces, side surface, upper surface) of the vehicle 1 on the right side and a stereo region finally formed on the left side. In this example, four fisheye cameras (HFOV 180 degrees or more) are disposed on the ceiling of the vehicle, and a 360-degree multi-stereo camera that images the entire periphery of the vehicle (a range of 360-degrees in the horizontal direction) is used. Two fisheye cameras are disposed on the ceiling for the front and the rear, respectively, and stereo regions are formed on the front and the rear, respectively.

The following can be understood from the disposition example of FIG. 3. First, as a first point, since the imaging range of one camera is wide, the number of camera configurations can be small, but the angular resolution of the image is reduced, it is difficult to measure the distance to a distant place, and the performance of object recognition as a monocular camera is also reduced. As a second point, the ultra-wide-angle camera has a deep depth of field (a wide range in which focusing is performed), and when the ultra-wide-angle camera is disposed outdoors, such as when the ultra-wide-angle camera is disposed on a ceiling of a vehicle, visibility is likely to decrease due to lens deposits such as water droplets and dirt. Therefore, reliability is particularly required in the front area, which is not preferable. As a third point, although there is no gap in the stereo region, it is necessary to mount the camera on the ceiling, and a large shielding region is generated when the vehicle ceiling portion is reflected in the lower portion of the image.

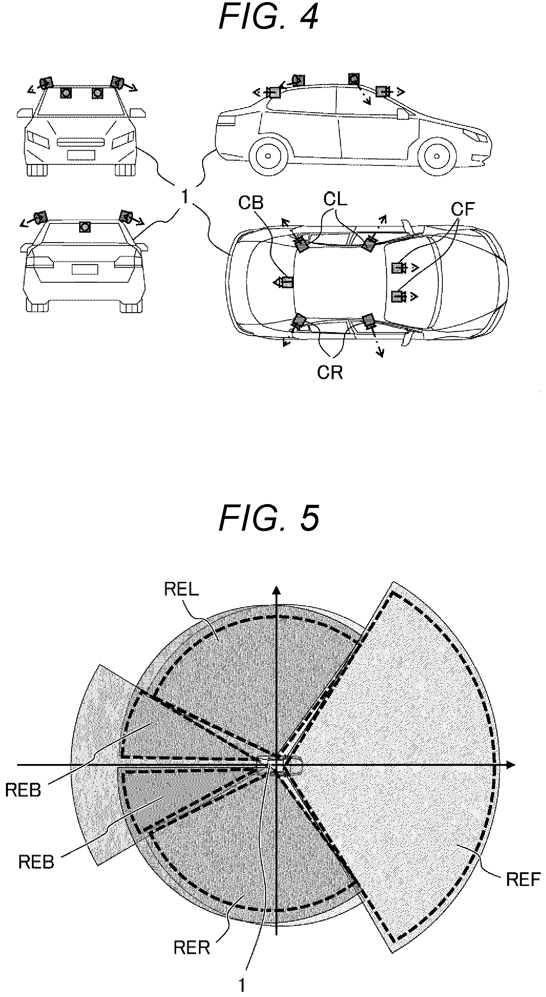

From the above results in the assumed examples of FIGS. 1, 2, and 3, the basic idea of the present invention is to configure the camera system as follows. In this basic idea, as a first point, as illustrated in FIG. 4, a plurality of cameras C are attached to a peripheral edge portion of the vehicle 1 where the reflection of the host vehicle body is small. In this case, the camera C is a monocular camera including a lens and one imaging element, or a camera including a mirror having a curved surface shape such as a spherical surface, a hyperbolic surface, a conical surface, or a parabolic surface and one imaging element, and the peripheral edge portion may be inside or outside the vehicle interior. However, it is preferable to dispose the camera at a position where the reflection of the body is small.

As a second point, as illustrated in FIG. **5****,** a plurality of monocular cameras C are combined to form a stereo region of the entire periphery. Each camera is disposed so as to cover the entire periphery so as not to form a gap equal to or larger than the vehicle width in the stereo region of the entire periphery. In other words, as illustrated in FIG. **5****,** the end portions of the stereo regions are in contact with or intersect with each other.

As a third point, as illustrated in FIG. **5****,** the angle difference in the optical axis direction between the cameras forming the stereo pair is preferably less than 90 degrees. This makes it possible to prevent a decrease in distance measurement accuracy due to the optical axis angle difference.

The configuration example of FIG. 4 is a camera system having a total of seven cameras including two front cameras CF that image the front, two right and left, a total of four, cameras CS (CR, CL) that image the right and left, and one rear camera CB that images the rear. The right and left cameras (CR, CL) also include those that image obliquely forward and rearward in the lateral direction.

Furthermore, the configuration example of FIG. 4 is a camera system including seven cameras including two front cameras CF having a viewing angle of 120 degrees, a left front camera CLF and a right front camera CRF having a viewing angle of 90 degrees on the left and right as side cameras, a left rear camera CLR and a right rear camera CRR having a viewing angle of 120 degrees, and a rear camera CB having a viewing angle of 60 degrees as a rear camera. As a result, each of the front, rear, right, and left directions is imaged by two or more monocular cameras, and stereo vision is enabled. Note that the condition here is sufficient as long as a stereo visual field can be secured in the entire periphery, and since a fisheye lens can be adopted as the camera, the number of cameras may be equal to or smaller than the number of cameras of the configuration of FIG. 4 or may be equal to or larger than the number of cameras.

Furthermore, here, the promise of the symbol C indicating the camera will be described. F, B, R**,** and L indicating front, rear, right, and left will be added next to the camera C. However, in the front and rear, and right and left, the front and rear are prioritized. Therefore, regarding the right and left cameras, the camera whose optical axis direction is diagonally forward are distinguished by F, and the camera whose optical axis direction is diagonally rearward are distinguished by B. In addition, when the plurality of homogeneous cameras cannot be distinguished as described above, they are distinguished by numbers as necessary. In addition, this promise of symbol assignment also applies to the symbol RE indicating the visual field region.

Accordingly, in the present specification, the optical axis of the camera and the "direction" of the region are first defined by front, rear, right, and left, and are referred to as a front camera, a rear camera, a right camera, and a left camera. However, the right and left cameras maybe collectively referred to as side cameras. Moreover, in the front, rear, right, and left, right and left are used prior to the front and rear. Therefore, a camera in which the optical axis of the right and left cameras is on the front side is referred to as a side front camera (right front camera, left front camera), and a camera in which the optical axis of the right and left cameras is on the rear side is referred to as a side rear camera (right rear camera, left rear camera).

FIG. 5 is a diagram illustrating a stereo region formed by the seven camera system illustrated in FIG. 4.

As illustrated in FIG. 5, the stereo region REF of 120 degrees is secured in the front by the two front cameras CF of 120 degrees, the stereo regions RER and REL of 90 degrees are secured in the right and left sides by the combination of the left front camera CLF and the left rear camera CLR and the right front camera CRF and the right rear camera CRR, and the stereo region REB of 60 degrees (30 degrees and 30 degrees) is secured in the rear by the combination of the rear camera CB, the left rear camera CLB, and the right rear camera CRB.

In the stereo region of the entire periphery illustrated in FIG. 5, since the end portions of the respective stereo regions are in contact with or intersect with each other, there is no gap having a size corresponding to the vehicle width. In other words, a stereo region with no discontinuity is formed over the entire periphery of the vehicle. Furthermore, in other words, it can be said that the camera system includes a first camera group disposed so as to be able to image the outside of the entire periphery continuous in at least one direction (for example, in the horizontal direction) around the vehicle, a second camera group including a plurality of cameras having an imaging region at least overlapping the imaging region of the first camera group, and a parallax calculation unit that performs stereo matching processing using images captured by the first camera group and images captured by the second camera group to obtain parallax information.

Furthermore, according to the camera system configuration of FIG. 5, it is possible to obtain effects that the shielding region in the vertical direction due to the reflection of the body is smaller than that in the assumed example 3, distance information can be acquired in the entire periphery in the horizontal direction, and distance measurement accuracy in distant place is high since it is not necessary to use an ultra-wide-angle lens such as a fisheye lens.

Hereinafter, a camera system capable of measuring the distance of the entire periphery without any discontinuity will be referred to as a 360-degree multi-stereo camera system. A configuration example for realizing the 360-degree multi-stereo camera system will be described in detail below in relation to the number of cameras.

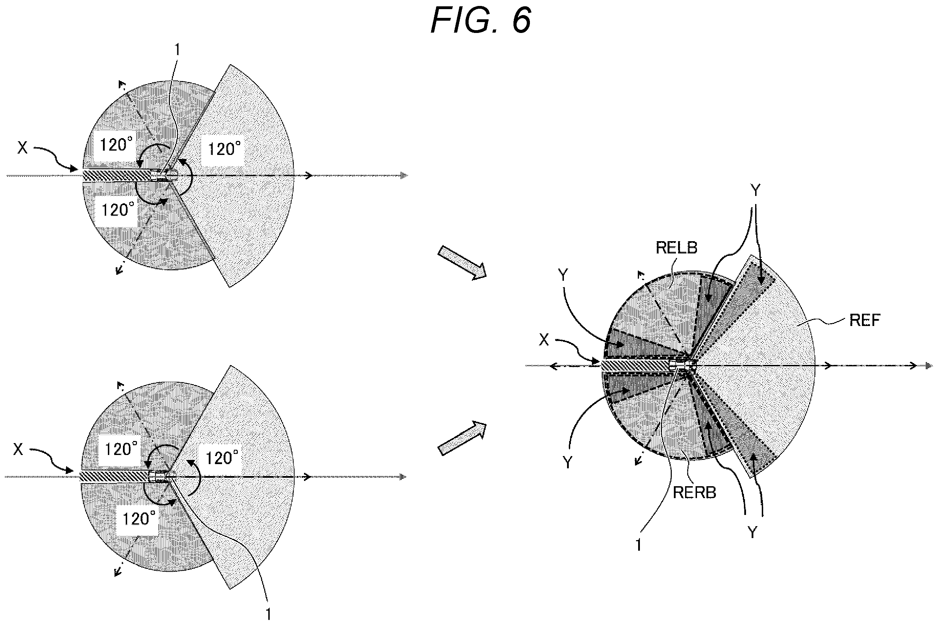

As a first configuration example using six cameras, a 360-degree multi-stereo camera system using two sets of three camera groups that images the front, left rear, and right rear will be described with reference to FIG. 6. In the upper left portion of FIG. 6, a camera group 1 including three cameras imaging the front, the left rear, and the right rear is illustrated. All of the three cameras of the camera group 1 have an angle of view of 120 degrees.

In the lower left portion of FIG. 6, a camera group 2 including three cameras capturing images of the front, the left rear, and the right rear is illustrated. Each of the three cameras of the camera group 2 has an angle of view of 120 degrees as in the case of the camera group 1. The cameras of the camera group 1 and the camera group 2 are disposed such that viewing angles FOV of the cameras do not overlap with each other, and the total of the horizontal right and left viewing angles HFOV is 360-degrees.

The right portion of FIG. 6 illustrates a stereo region obtained when two sets of the camera group 1 and the camera group 2 are combined. The imaging region of the camera group 1 and the imaging region of the camera group 2 overlap, and this overlapping imaging region is referred to as a stereo region. Since the front, right, and left rear stereo regions REF, RERB, and RELB are 120 degrees, respectively, it is equivalent to disposing three parallel stereo cameras having an angle of view of 120 degrees in the vehicle so that there is no overlapping angle of view. However, in this method, a blind spot region X is generated immediately behind the vehicle. In addition, since a portion where the stereo regions are adjacent is an end portion of the angle of view of each camera, a region Y in which the recognition accuracy as a monocular camera is deteriorated occurs.

That is, depending on camera attachment conditions, a blind spot region X (shaded portion) that is shielded by a part of the body and is not imaged as a monocular camera is formed. For this reason, it is preferable to be able to image at least the monocular region without a gap of 360-degrees. Furthermore, in a case where a wide-angle camera is used, the influence of distortion and chromatic aberration is large in the peripheral portion of the angle of view, the object recognition performance as a monocular camera is deteriorated, and unevenness may occur in the object recognition performance. Therefore, in order to suppress the unevenness of the object recognition performance, it is preferable to dispose the plurality of cameras so as not to generate a region imaged only in the peripheral portion of the angle of view, that is, a region Y in which the recognition accuracy as the monocular camera is deteriorated. Therefore, a configuration in which a plurality of monocular cameras having different optical axis directions can image at 360-degrees is preferable.

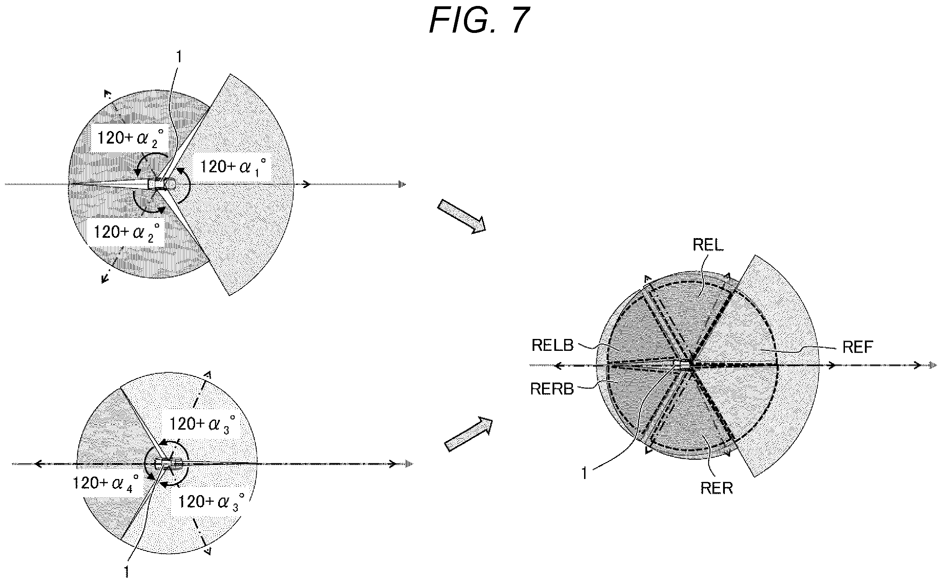

As a second configuration example using six cameras, a 360-degree multi-stereo camera system including two sets of a camera group 1 of three cameras that image the front, left rear, and right rear and a camera group 2 of three cameras that image the left front, right front, and rear will be described with reference to FIG. 7. In the upper left portion of FIG. 7, the camera group 1 of the three cameras that image the front, the left rear, and the right rear is illustrated. The three cameras of the camera group 1 have an angle of view of 120 degrees + α1 or 120 degrees + α2. In the lower left portion of FIG. 7, the camera group 2 of the three cameras that image the left front, the right front, and the rear is illustrated. The three cameras of the camera group 2 have an angle of view of 120 degrees + α3 or 120 degrees + α4 as in the case of the camera group 1. Note that α1+α2+α3+α4 is an angle of view addition value for each camera, and an arbitrary numerical value of 0 or more is set such that imaging regions of adjacent cameras in contact with each other or intersect with each other according to an installation condition of each camera.

The camera group 1 and the camera group 2 are disposed such that the viewing angles FOV of the cameras at least overlap, that is, the end portions of the viewing angles FOV intersect with each other. In other words, the camera group 1 and the camera group 2 are configured so that the sum of the right and left viewing angles HFOV in the horizontal direction is 360-degrees + α1 + α2 + α3 + α4. Here, the end portions of the respective stereo regions in contact with or intersect with each other such that the entire periphery of the stereo regions where the imaging regions of the camera group 1 and the camera group 2 overlap each other is covered.

According to the camera disposition of FIG. 7, the optical axis directions of the six cameras are all different. This point is different from the camera disposition of FIG. 6. In FIG. 7, the stereo vision is performed by two camera pairs (for example, a camera that images the front of the camera group 1 and a camera that images the left front of the camera group 2) including the same direction as the angle of view. In other words, the stereo vision is performed by one of the cameras in the camera group 1 and one of the cameras in the camera group 2 around the entire periphery of the vehicle, and the stereo vision region is set to 360-degrees or more in total. In the present configuration example described below, the two cameras that perform stereo vision have different optical axes, but may further include cameras having optical axes in the same direction in the development case.

The right portion of FIG. 7 illustrates a stereo region obtained by combining two sets of the camera groups 1 and 2 in the present configuration example. In the present configuration example, five stereo regions of the front stereo region REF, the right and left stereo regions RER and REF, and the rear stereo regions RERB and RELB are formed. Also in this case, the total HFOV of the stereo region is 360-degrees or more, and the total angle of view of the plurality of monocular cameras can be covered with no gap of 360-degrees.

In this configuration example, the 360-degree multi-stereo camera is realized by six cameras in which the number of cameras is reduced by one as compared with the configuration example of the seven cameras illustrated in FIG. 5, and it is possible to reduce the cost and the processing load of the image by reducing the number of cameras, and it can be said that it is a "cost oriented type".

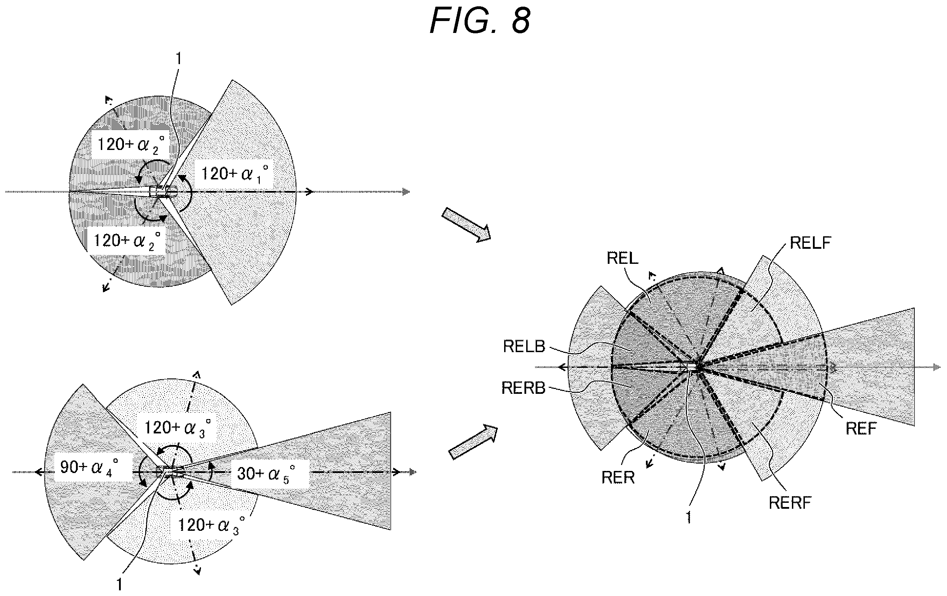

Next, as a first configuration example using seven cameras, a 360-degree multi-stereo camera system including two sets of a camera group 1 of three cameras that image the front, left rear, and right rear, and a camera group 2 of four cameras that image the front, left front, right front, and rear will be described with reference to FIG. 8. In the upper left portion of FIG. 8, three camera groups 1 for imaging the front, the rear left, and the rear right are illustrated. The three cameras of the camera group 1 have an angle of view of 120 degrees + α1 or 120 degrees + α2. In the lower left portion of FIG. 8, the camera group 2 of four cameras that image the front, left front, right front, and rear is illustrated. Among the four cameras of the camera group 2, the camera that images the left front and the right front has an angle of view of 120 degrees + α3, the camera that images the rear has an angle of view of 90 degrees + α4, and the camera that images the front has an angle of view of 30 degrees + α5.

The right portion of FIG. 8 illustrates a stereo region obtained by combining two sets of camera groups 1 and 2 in the present configuration example. In the present configuration example, seven stereo regions of a front stereo region REF, right and left front stereo regions RERF and RELF, right and left stereo regions RER and REL, and right and left rear stereo regions RERB and RELB are formed. Also in this case, the total HFOV of the stereo region is 360-degrees or more, and the total angle of view of the plurality of monocular cameras can be covered with no gap of 360-degrees.

In the present configuration example, a narrow angle (30 degrees) camera is used as a monocular camera that images the front. The narrow angle cameras can be used in small object detection in distant place (such as traffic light recognition) . As described above, by combining the narrow angle camera and the wide angle (120 degrees) camera used for the small object detection in distant place, a 360-degree multi-stereo camera using an existing monocular camera system can be realized, and it can be said that "existing camera system usage type". According to the present configuration example, it is possible to achieve both the distant object detection performance in front and the stereo distance-measuring performance with no discontinuity at 360-degrees around the vehicle.

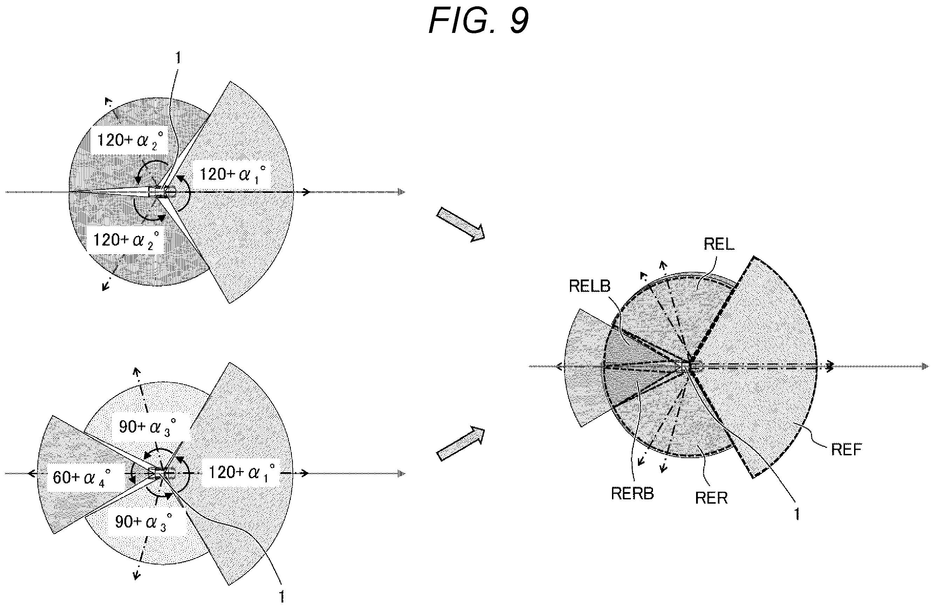

Next, as a second configuration example using seven cameras, a 360-degree multi-stereo camera system including two sets of a camera group 1 of three cameras that image the front, left rear, and right rear, and a camera group 2 of four cameras that image the front, left side, right side, and rear will be described with reference to FIG. 9. In the upper left portion of FIG. 9, the camera group 1 of three cameras for imaging the front, the rear left, and the rear right is illustrated. The three cameras of the camera group 1 have an angle of view of 120 degrees + α1 or 120 degrees + α2. In the lower left portion of FIG. 8, the camera group 2 of four cameras that image the front, left, right, and rear is illustrated. Among the four cameras of the camera group 2, the camera that images the front has an angle of view of 120 degrees + α1, the camera that images the rear has an angle of view of 60 degrees + α4, and the cameras that image the left front and the right front have an angle of view of 90 degrees + α3.

The right part of FIG. 9 illustrates a stereo region obtained by combining two sets of camera groups 1 and 2 in the present configuration example. In the present configuration example, five stereo regions of the front stereo region REF, the right and left stereo regions RER and REL, and the right and left rear stereo regions RERB and RELB are formed. Also in this case, the total HFOV of the stereo region is 360-degrees or more, and even a plurality of monocular cameras can be covered with no gap of 360-degrees.

In the present configuration example, since the front region having high importance constitutes one stereo region without seam, highly accurate parallax information can be acquired. In addition, by reducing the difference in the optical axis direction between the cameras constituting the stereo pair in the side region, the distance accuracy can be improved. As described above, in the region with high importance in the recognition of the outside information, the stereo vision is performed in one stereo region without seam, and the difference in the optical axis direction between the cameras constituting the stereo pair is reduced, so that a 360-degree multi-stereo camera in which the accuracy in the region with high importance is emphasized can be realized, and it can be said that the "accuracy emphasis type in the important region". Note that the region of high importance is not limited to the front of the vehicle, and any region such as the side, the rear, or the upper side of the vehicle may be set as the region of high importance.

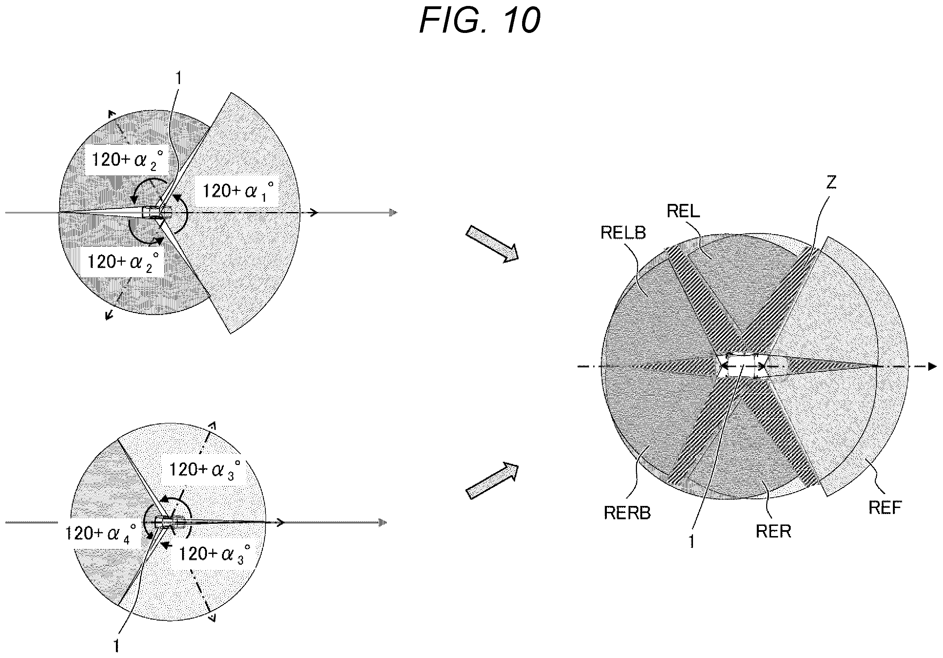

FIG. 10 is an enlarged view of a stereo region by the 360-degree multi-stereo camera system in the configuration example illustrated in FIG. 7. In this case, a portion that is not the stereo region is formed in the area near the vehicle (hatched portion). Since the total of the respective visual field regions at the predetermined positions of the camera group 1 and the camera group 2 illustrated in the upper and lower portions of the left portion of FIG. 10 is set to 360-degrees, a region where the stereo visual field cannot be secured may be generated in the vicinity of the vehicle according to the positional deviation of the disposition place of the cameras.

A stereo visual field securing region (REF + RER + REF + RERB + RELB) is illustrated in the right portion of FIG. 10. A portion other than the stereo visual field securing region corresponds to the blind spot region Z of the stereo visual field, and is illustrated in an enlarged manner in a hatched portion in the right portion of FIG. 10. As described above, the problem that the blind spot region Z of the stereo visual field is generated mainly in the vicinity of the vehicle, there is no problem in distance measurement in distant place, and the blind spot region is also narrow. However, a configuration example for further coping with this problem will be described below.

This problem is caused by a difference in installation positions of the plurality of cameras illustrated in FIG. 4. In the horizontal direction, it is possible to narrow the blind spot region Z of the stereo visual field by disposing the cameras such that the distance difference between the two cameras disposed on the vehicle upper surface is reduced or adjusting the viewing angle of each camera. As illustrated in FIGS. 1 and 2, conventionally, the blind spot region of the stereo visual field has a size corresponding to a vehicle width, but in the present configuration example, this can be narrowed to a distance between cameras and can be limited to a short distance.

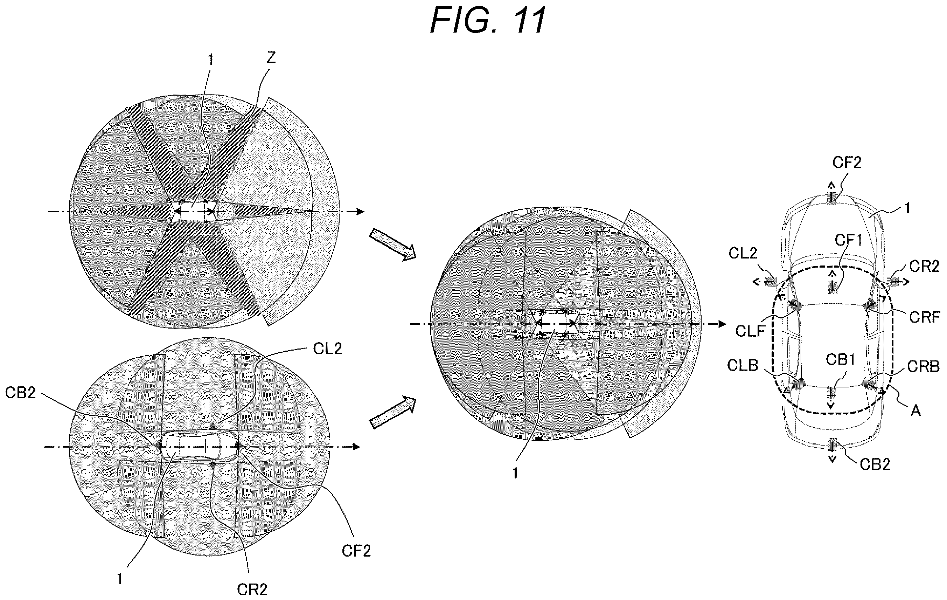

Next, the elimination and narrowing of the blind spot region of the stereo visual field will be further described. FIG. 11 is a diagram illustrating a configuration example in which the blind spot region of the stereo visual field can be eliminated, and is different from the configuration example of FIG. 7 in that four cameras in front, rear, right, and left are added on the basis of the configuration example of FIG. 7.

The upper left portion of FIG. 11 illustrates a configuration in which the camera group 1 and the camera group 2 illustrated in FIG. 7 are combined, and is realized by a camera group A including six cameras of a front camera CF1, a right front camera CRF, a right rear camera CRB, a left front camera CLF, a left rear camera CLB, and a rear camera CB1 among the cameras mounted on the vehicle 1 in the right portion of FIG. 11.

Meanwhile, a camera group 3 in the lower left portion of FIG. 11 is added to exclude the blind spot region of the stereo visual field described above. This is realized by four fisheye cameras of a front camera CF2, a right camera CR2, a left camera CL2, and a rear camera CB2 among the cameras mounted on the vehicle 1 on the right in FIG. 11.

The central portion of FIG. 11 is a stereo region obtained by overlapping the viewing angles of the camera group A (combination of the camera group 1 and the camera group 2) and the camera group 3 illustrated in the left portion of FIG. 11, and the entire region around the vehicle in the horizontal direction is completely covered. By adding four fisheye cameras mounted on the front, rear, right, and left, a stereo region can be formed even in a near area by a camera pair of the camera of the camera group A and the fisheye camera. This configuration example can be referred to as a "full distance range cover type" in which the entire periphery from the near area to the distant area is covered with the stereo region.

It is effective to add the camera group 3 in the lower left portion of FIG. 11 to other configuration examples so that it is possible to take measures against the blind spot region of the stereo visual field by the fisheye camera illustrated in FIG. 11 with respect to the configuration example of FIG. 7. Note that, in the present configuration example, four fisheye cameras are exemplified as the camera group 3, but the type and number of cameras are not limited thereto.

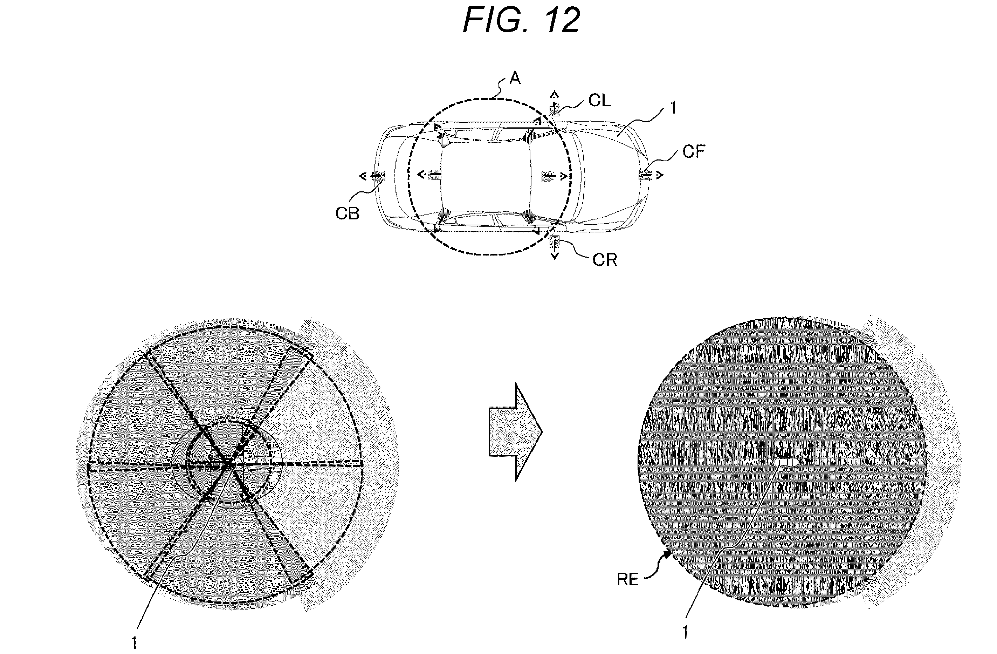

FIG. 12 is a diagram summarizing the concept of FIG. 11. The upper portion of FIG. 12 illustrates a disposition example of the camera in the vehicle 1. A state in which front, rear, right, and left fisheye cameras CF, CB, CR, and CL are added to the camera group A mounted on the vehicle 1 is illustrated. In the lower left portion of FIG. 12, the imaging region of each camera and each stereo region in this case are illustrated separately. The lower right portion of FIG. 12 illustrates that the stereo region is realized in the entire peripheral region including the vicinity of the vehicle 1 according to the disposition example of the camera illustrated in the upper portion of FIG. 12.

Although not illustrated, the plurality of camera images are introduced into a calculation unit in the vehicle 1 and processed. Specifically, stereo matching processing is performed on an overlapping region of any two images, and parallax calculation for obtaining parallax is performed. Thus, the distance calculation to the imaged target object in the camera image is performed.

The 360-degree multi-stereo camera system described in the first embodiment is the camera system including the plurality of cameras mounted on a vehicle and the parallax calculation unit that performs stereo matching processing using a plurality of images captured by the plurality of cameras to obtain parallax. In this case, a region including an outside region located in front of the vehicle is defined as a first region, a region including an outside region located on the right side of the vehicle is defined as a second region, a region including an outside region located on the left side of the vehicle is defined as a third region, and a region including an outside region located behind the vehicle is defined as a fourth region.

In addition, the plurality of cameras are disposed in the vehicle so as to have a first overlapping imaging visual field, a second overlapping imaging visual field, a third overlapping imaging visual field, and a fourth overlapping imaging visual field as overlapping imaging visual fields where imaging visual fields of at least two cameras in the horizontal direction overlap in the first region to the fourth region.

For an obtained image, the end portion of the first overlapping imaging visual field is adjacent in at least a portion to the end portion of the second overlapping imaging visual field and the end portion of the third overlapping imaging visual field, or overlaps in at least a portion to the second overlapping imaging visual field and the third overlapping imaging visual field, and the end portion of the fourth overlapping imaging visual field is adjacent in at least a portion to the end portion of the second overlapping imaging visual field and the end portion of the third overlapping imaging visual field, or overlaps in at least a portion to the second overlapping imaging visual field and the third overlapping imaging visual field.

Furthermore, the first overlapping imaging visual field to the fourth overlapping imaging visual field are respectively imaged by at least two cameras having different optical axis directions, and the parallax calculation unit performs stereo matching processing using a plurality of images captured in the first overlapping imaging visual field to the fourth overlapping imaging visual field.

### Second Embodiment

In the first embodiment, implementation of the 360-degree multi-stereo camera system has been described, and further, the configuration for excluding the blind spot region of the stereo visual field has been described.

A problem in this case is that the stereo region is lost due to a failure of the camera of the vehicle 1, and the distance cannot be measured. In particular, the front camera is important. Since redundancy is effective as a countermeasure, a countermeasure for improving reliability at the time of sensor failure will be described in a second embodiment. Although the front reinforcement is particularly described, it goes without saying that the present invention can also be applied to the side and the rear as necessary.

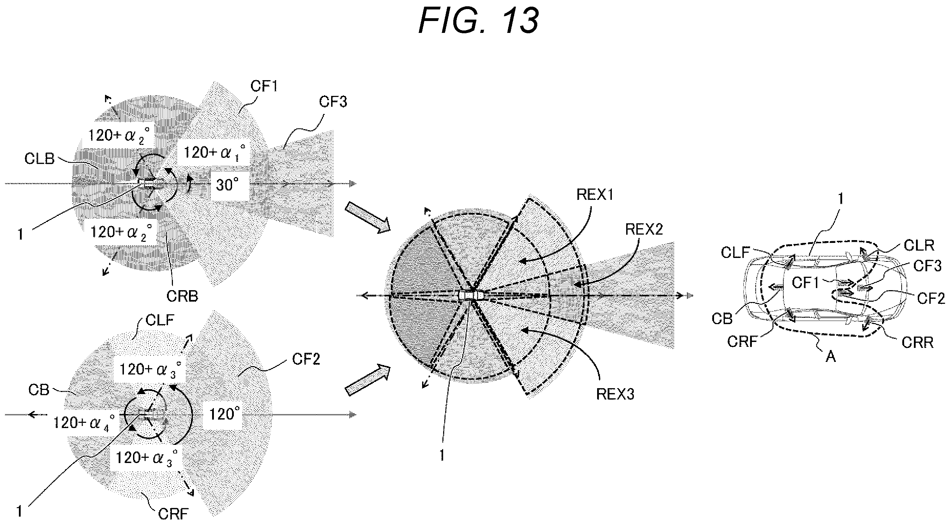

FIG. 13 illustrates a configuration example of a 360-degree multi-stereo camera by a combination of a camera group 1 and a camera group 2 using four cameras. In the upper left portion and the lower left portion of FIG. 13, the visual field region by the camera group 1 and the camera group 2 is denoted by a symbol of a camera that images this region. The viewing angle region by the camera group 1 in the upper left portion of FIG. 13 is basically obtained by adding a front camera CF3 having a narrow angle (30 degrees) to the camera group 1 illustrated in the upper left portion of FIG. 7.

The viewing angle region of the camera group 2 in the lower left portion of FIG. 13 is basically obtained by adding the front camera CF2 having a wide angle (120 degrees) to the camera group 2 illustrated in the lower left portion of FIG. 7. In this configuration, the cameras are disposed such that the viewing angles FOV of the cameras partially overlap each other, and the sum of the right and left viewing angles HFOV in the horizontal direction is 360-degrees or more.

In the central portion of FIG. 13, the stereo region generated when the camera group 1 and the camera group 2 are combined is illustrated. Here, since the visual field regions of three or more cameras overlap, a region where a plurality of stereo regions overlap is referred to as an overlapping stereo region, and in the central portion of FIG. 13, portions indicated by overlapping stereo regions REX1, REX2, and REX3 correspond thereto.

The right portion of FIG. 13 illustrates a disposition example of the cameras. The overlapping stereo region REX1 is covered by three cameras CLF, CF1, and CF2, the overlapping stereo region REX2 is covered by three cameras CF1, CF2, and CF3, and the overlapping stereo region REX3 is covered by three cameras CRF, CF1, and CF2. Note that the overlapping stereo region REX2 is covered by four cameras including either CLF or CRF in the short distance portion.

It is apparent that the problem that the stereo region is lost due to the failure of the camera of the vehicle 1 and the distance cannot be measured, which is required as a countermeasure in the second embodiment, is solved by the configuration example illustrated in FIG. 13 in which the particularly important front side is dealt with. For example, in a case where CF1 among the three cameras that image the overlapping stereo region REX1 fails, the stereo region of the remaining CLF and CF2 can be secured, so that the stereo vision of the region can be continued even after the defect of CF1. The configuration example illustrated in FIG. 13 can be referred to as a "forward prioritized redundant type".

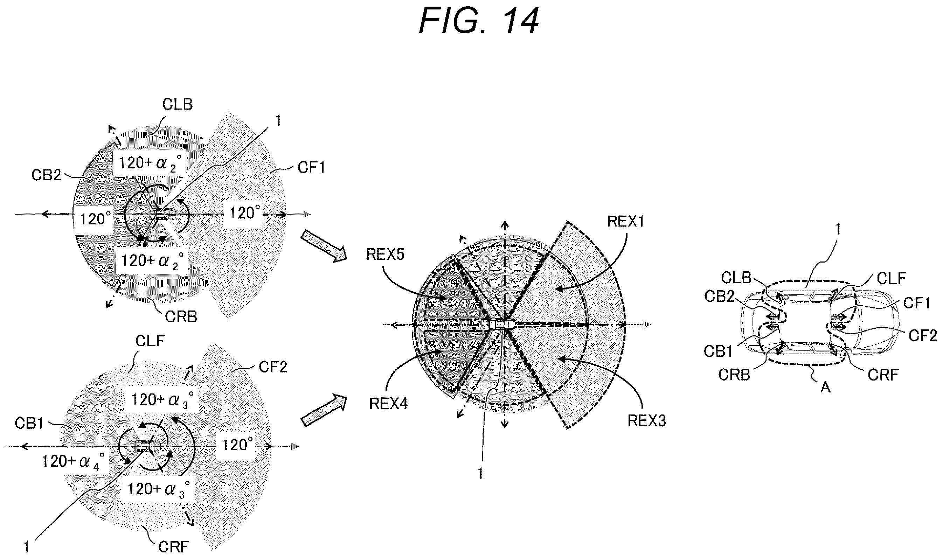

FIG. 14 illustrates a configuration example in a concept of placing emphasis on the rear, and is different from the configuration example illustrated in FIG. 13 in that the rear camera CB2 of 120 degrees is added instead of the front camera CF3 of the narrow angle illustrated in FIG. 13. In this case, overlapping stereo regions REX4 and REX5 are formed on the rear side. Since the rear overlapping stereo region REX4 is covered by three cameras CRB, CB1, and CB2, and the overlapping stereo region REX5 is covered by three cameras CLB, CB1, and CB2, even when one of the three cameras fails, the stereo region can be secured by the remaining two cameras. The configuration example illustrated in FIG. 14 can be referred to as a "rearward prioritized redundant type".

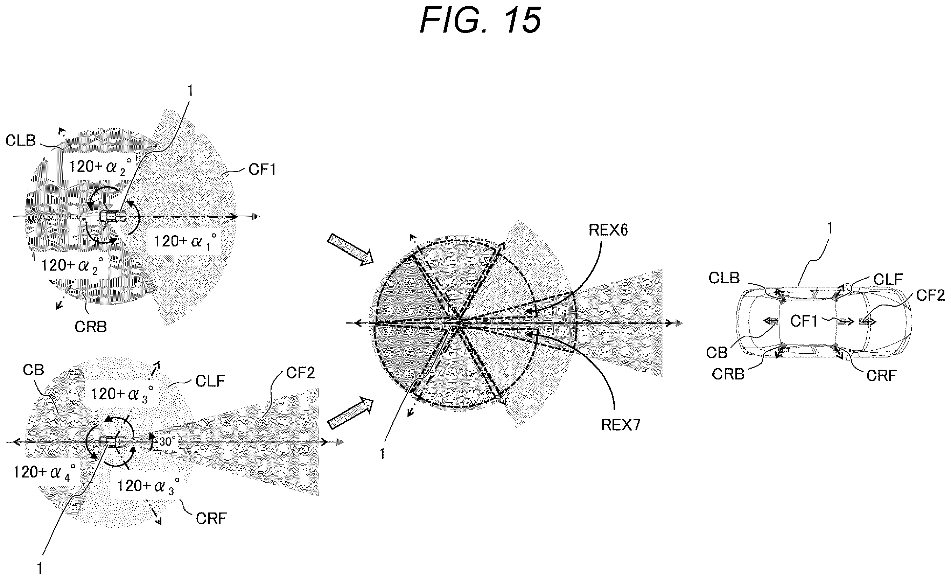

FIG. 15 illustrates a configuration example in a concept of placing emphasis on cost, and is different from FIG. 13 in that the front camera CF3 having a narrow angle is added to the camera group 2 in the 360-degree multi-stereo camera in which the camera group 1 and the camera group 2 using the three cameras illustrated in FIG. 7 are combined. In this case, the overlapping stereo regions REX6 and REX7 are formed on the front side. Since the front overlapping stereo region REX6 is covered by the three cameras CLF, CF1, and CF2, and the overlapping stereo region REX7 is covered by the three cameras CRF, CF1, and CF2, even when one of the three cameras fails, the stereo regions of the remaining two cameras can be secured. The configuration example illustrated in FIG. 14 can be referred to as a "cost prioritized redundant type".

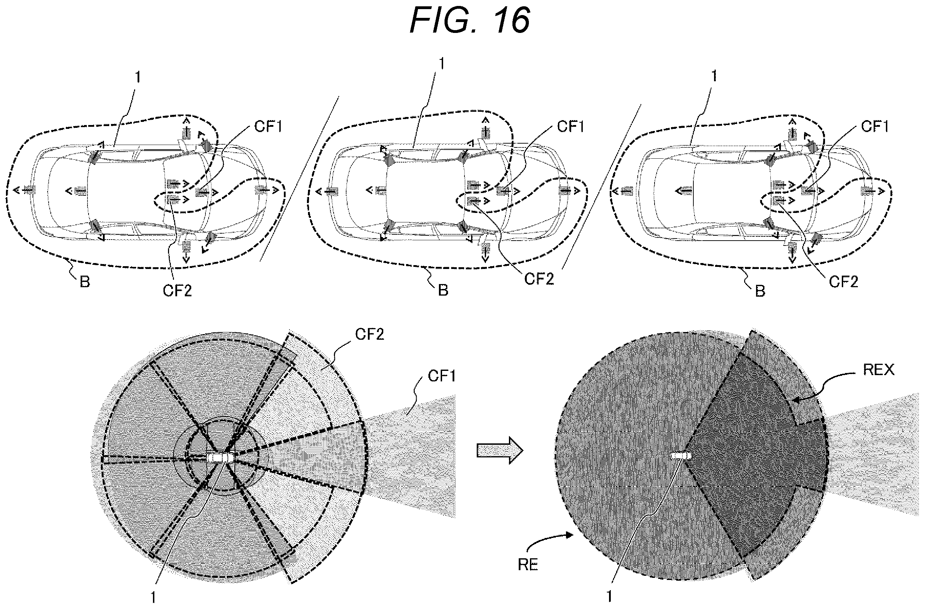

FIG. 16 is a diagram illustrating another configuration example, and is different from the configuration example illustrated in FIG. 13 in that the front camera CF1 having a narrow angle (30 degrees) and the front camera CF2 having a wide angle (120 degrees) are added to a multi-stereo camera (camera group B) using 10 cameras which is a combination of the camera groups 1, 2, and 3 illustrated in FIG. 11. Although various variations are illustrated as the camera group B in the disposition example of the camera in the upper portion of FIG. 16, the present embodiment can cope with any of these. In this case, since the overlapping stereo regions of three or more cameras are formed in almost the entire front region, even when one of the three cameras fails, the stereo regions of the remaining two cameras can be secured.

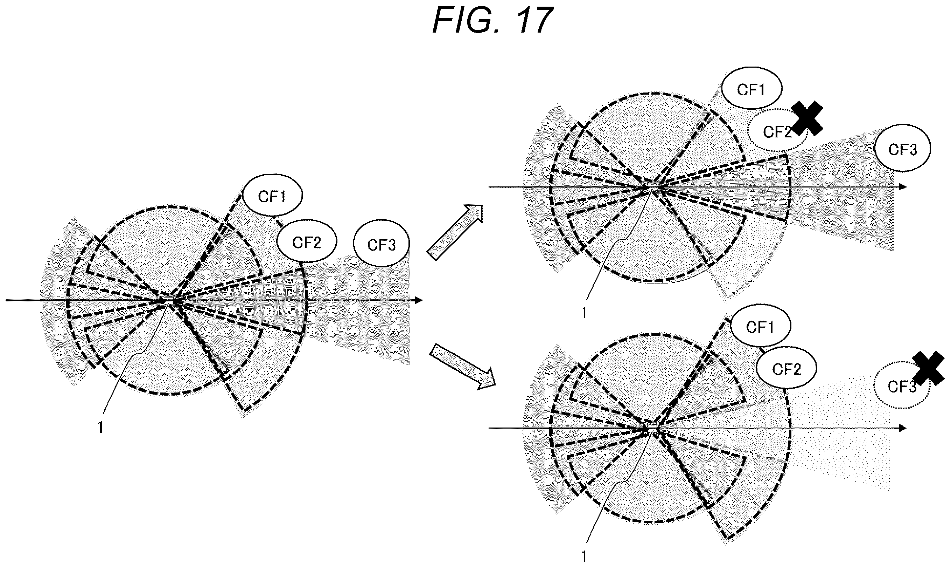

FIG. 17 is a diagram summarizing the correspondence according to the second embodiment. First, the left portion of FIG. 17 illustrates a state in which the entire periphery is covered by a plurality of cameras to secure stereo vision. Among them, for the front, the stereo vision from a long distance to a medium long distance is realized by the cameras CF1 and CF2 having a wide angle (120 degrees) and the camera CF3 having a narrow angle (30 degrees). Note that although other cameras are also involved in multiplexing for the short distance, description thereof is omitted here.

The upper right portion of FIG. 17 illustrates a case where the wide-angle camera CF2 fails in the stereo vision by three cameras at the medium long distance. Although the stereo vision in the middle-distance region using the camera CF2 is lost, the stereo vision in the 30 degree range is secured by the presence of the camera CF1 and the camera CF3. The same applies to a case where the camera CF1 is defective instead of the camera CF2.

The lower right portion of FIG. 17 illustrates a case where the narrow angle camera CF3 fails in the stereo vision by three cameras at the medium long distance. Although the stereo vision in the medium long distance region using the camera CF3 is lost, the stereo vision in a wide range of a short distance is secured by the presence of the camera CF1 and the camera CF2.

### Third Embodiment

In a third embodiment, acquiring highly accurate parallax information in the processing of the overlapping stereo region described in the second embodiment will be described.

For example, in FIG. 17, in a case where a part of the stereo region formed by the cameras CF1 and CF2 overlaps the stereo region formed by other cameras (for example, CF1 and CF3), there is a problem that it is preferable to generate the parallax information using either the stereo region by the cameras CF1 and CF2 or the stereo region by the cameras CF1 and CF3.

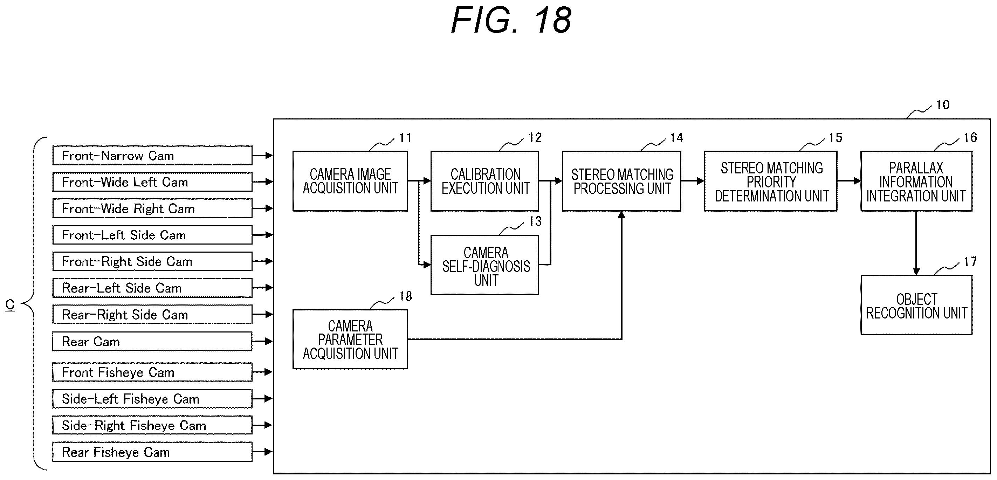

FIG. 18 is a diagram illustrating a configuration example of an in-vehicle imaging device 10 that processes image information from a plurality of cameras. The in-vehicle imaging device 10 obtains object recognition information from parallax information obtained from images of the plurality of cameras, and outputs the object recognition information to a vehicle control device (not illustrated) side. Note that the plurality of cameras C is an example and is not limited to the configuration described in the present configuration diagram.

The images captured by the plurality of cameras C are sequentially input in time series to a camera image acquisition unit 11 in the in-vehicle imaging device 10. For these images, a calibration execution unit 12 obtains internal parameters such as a lens focal length, external parameters representing the position and attitude of the camera, and a distortion aberration coefficient of the lens, and performs processing of correcting the image. In addition, a camera self-diagnosis unit 13 diagnoses the camera using the image.

In addition, a camera parameter acquisition unit 18 acquires parameters of the plurality of cameras mounted on the vehicle in advance. The parameter is, for example, a resolution of the imaging element, a pixel size, a pixel pitch, a focal length of the lens, a lens distortion parameter, a camera installation angle, or the like. A stereo matching processing unit 14 searches for corresponding points from two images captured from different viewpoints at the same timing and calculates the parallax. As a result**,** the distance information to the object (target object) appearing together with the two images obtained by photographing the common portion can be obtained.

The stereo matching priority determination unit 15 is a function added according to the present invention, and determines which combination should be preferentially processed when there are a plurality of image combinations with which stereo vision can be obtained for a plurality of screens from a plurality of cameras.

A parallax information integration unit 16 gives priority to the parallax information generated by each camera pair on the basis of the result of the stereo matching priority determination unit 15. Further, the information is integrated while only the parallax information having the predetermined or higher priority is left, and the distance to all or some objects in the photographed image is obtained. In addition, an object recognition unit 17 recognizes whether an object being photographed is an object to be monitored or an object not to be monitored in traveling of the vehicle, and outputs information on an object to be monitored and a distance to the object to an external vehicle control device (not illustrated) .

FIG. 18 illustrates a configuration example in a case where recognition performance and robustness are prioritized, and the stereo matching priority determination unit 15 is disposed after the stereo matching processing unit 14. After the stereo matching processing unit 14 obtains the parallax information for the plurality of stereo regions, the stereo matching priority determination unit 15 determines the priority of these stereo regions and outputs the same to the parallax information integration unit or the object recognition unit in the subsequent stage. As a result, the priority at the time of performing the stereo matching processing is applied to the next and subsequent captured images.

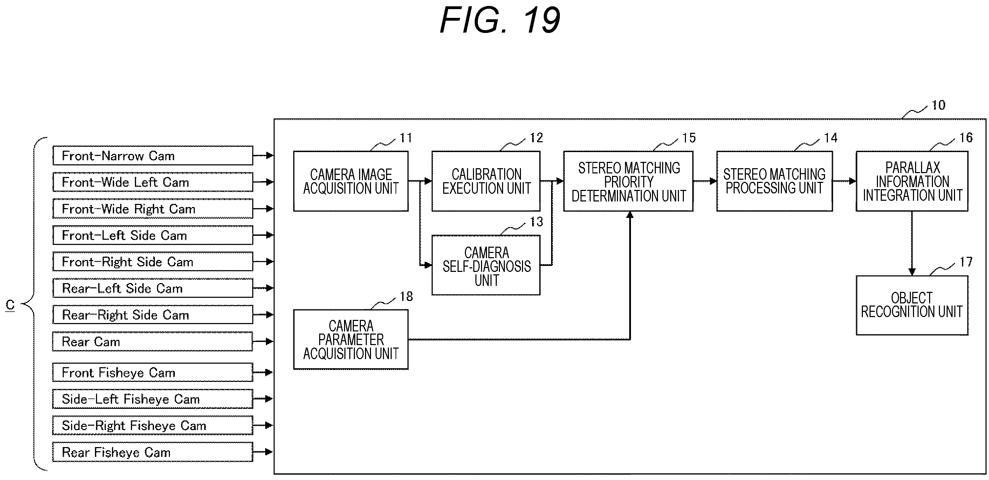

Meanwhile, FIG. 19 illustrates a configuration example suitable for a case where processing load reduction is prioritized, and is different from the configuration example illustrated in FIG. 18 in that the stereo matching processing unit 14 is disposed after the stereo matching priority determination unit 15. As a result, it is possible to perform processing in which the priority at the time of performing the stereo matching processing is limited to one with a high priority, and it is possible to reduce the processing load.

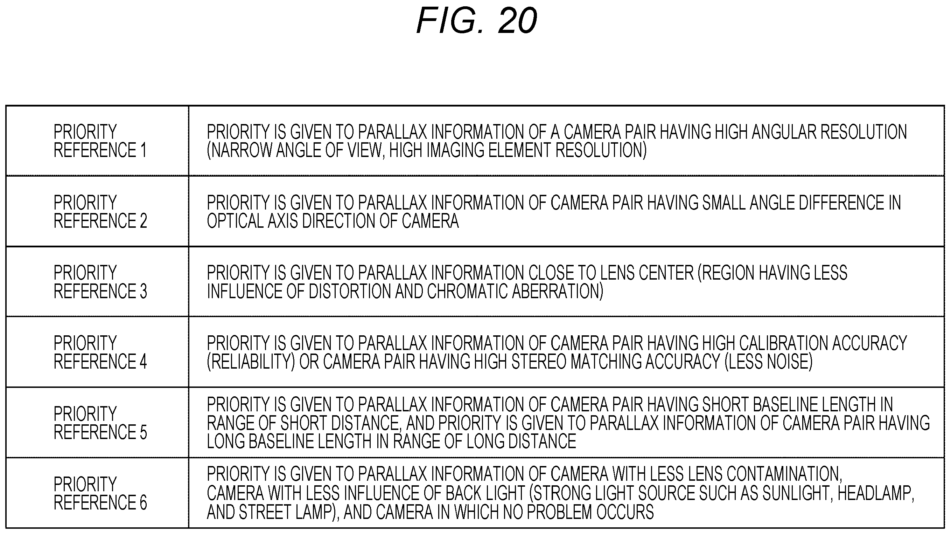

Next, the concept of priority in the stereo matching priority determination unit 15 will be described. Here, in a case where the stereo regions overlap, the parallax information is prioritized on the basis of the following conditions. The priority is determined by what is emphasized (priority reference), and here, a plurality of concepts will be described. FIG. 20 illustrates an example of the priority reference.

A priority reference 1 is an idea that priority is given to parallax information of a camera pair having a high angular resolution (narrow angle of view, high imaging element resolution). A priority reference 2 is an idea that priority is given to parallax information of a camera pair having a small angle difference in the optical axis direction of the camera. A priority reference 3 is an idea that priority is given to parallax information close to the lens center (region having less influence of distortion and chromatic aberration). A priority reference 4 is an idea that priority is given to parallax information of a camera pair having high calibration accuracy (reliability) or a camera pair having high stereo matching accuracy (less noise). A priority reference 5 is considered to prioritize parallax information acquired by a camera pair having a short baseline length in a range of a short distance from the host vehicle, and prioritize parallax information acquired by a camera pair having a long baseline length in a range of a long distance from the host vehicle. A priority reference 6 is an idea that priority is given to parallax information of a camera with less lens contamination, a camera with less influence of back light (strong light sources such as sunlight, headlamps, and street lamps), and a camera in which no problem occurs. As the reference, a reference other than these may be applied.

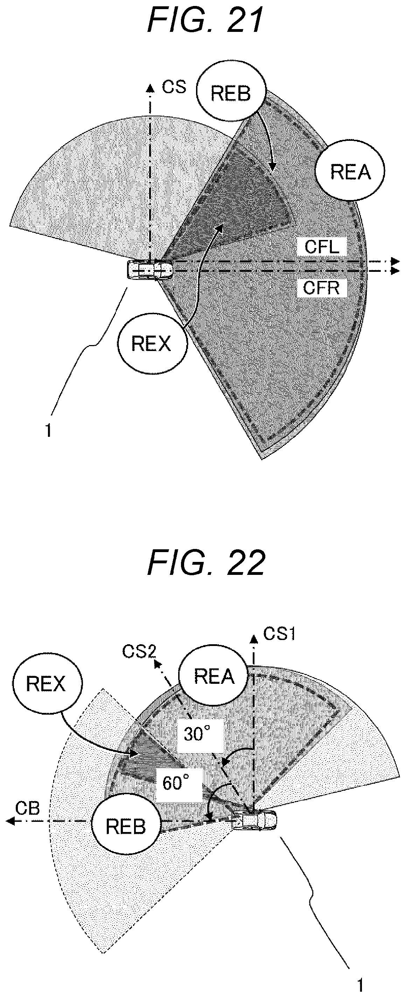

The priority reference 1 will be described in detail with reference to FIG. 21. In this example, the stereo regions REA, REB, and REX are formed by three cameras of the front cameras CFR and CFL, and the side camera CS. In this case, REX is the overlapping stereo region, and the parallax information can be acquired from either the stereo region formed by CFR and CFL or the stereo region formed by CFL and CS. Therefore, it is examined from which region the parallax information is to be acquired.

First, regarding the stereo region REA, this region is a stereo region of the camera CFL of 8 MP (Mega Pixel) and an angle of view of 120 degrees and the camera CFR of 8 MP and an angle of view of 120 degrees. The angular resolution of the camera CFL = 8/120 [Mega pixel/deg], and the angular resolution of the camera CFR = 8/120 [Mega pixel/deg]. Therefore, the angular resolution of the stereo region REA is 8/120=67 [Mega pixel/deg].

Next, regarding the stereo region REB, this region is a stereo region of the camera CFL of 8 MP (Mega Pixel) and an angle of view of 120 degrees and the camera CS of 8 MP and an angle of view of 150 degrees. The angular resolution of the camera CFL = 8/120 [Mega pixel/deg], and the angular resolution of the camera CS = 8/150 [Mega pixel/deg]. Therefore, the angular resolution of the stereo region REB is 8/150 = 53 [Mega pixel/deg].

The angular resolution of the stereo region REA is larger than the angular resolution of the stereo region REB. At this time, based on the idea of prioritizing the parallax information of the camera pair having a high angular resolution (narrow angle of view, high imaging element resolution), the parallax information of the overlapping stereo region REX prioritizes the stereo region REA. For example, the "prioritizing" means, for example, that in the overlapping stereo region REX, only the parallax information obtained from the stereo region REA may be used, or the parallax information obtained from the stereo region REA may be weighted and used together with the parallax information obtained from the stereo region REB.

The priority reference 2 will be described in detail with reference to FIG. 22. In this example, stereo vision regions REA and REB are formed by three cameras of the side cameras CS1 and CS2, and the rear camera CB. Since the stereo regions REA and REB overlap in the region REX, the region REX is an overlapping stereo region.

First, regarding the stereo region REA, this region is a stereo region of the camera CS1 having 8 MP (Mega Pixel) and an angle of view of 150 degrees and the camera CS2 having 8 MP and an angle of view of 150 degrees. The angular resolution of the camera CS1 = 8/150 [Mega pixel/deg] and the angular resolution of the camera CS2 = 8/150 [Mega pixel/deg]. Therefore, the angular resolution of the stereo region REA is 8/150 [Mega pixel/deg], and the optical axis angle difference is 30 degrees.

Next, regarding the stereo region REB, this region is a stereo region of the camera CB having 5 MP (Mega Pixel) and an angle of view of 90 degrees and the camera CS2 having 8 MP and an angle of view of 150 degrees. The angular resolution of the camera CR = 5/90 [Mega pixel/deg] and the angular resolution of the camera CS2 = 8/150 [Mega pixel/deg]. Therefore, the angular resolution of the stereo region REB is 8/150 [Mega pixel/deg], and the optical axis angle difference is 60 degrees.

Meanwhile, the stereo region REX is an overlapping region of the stereo region REA and the stereo region REB. Then, the angular resolution of the stereo region REA is the same as the angular resolution of the stereo region REB. Further, the optical axis angle difference of the stereo region REA is smaller than the optical axis angle difference of the stereo region REB. At this time, based on the idea that the parallax information of the camera pair having a small angle difference in the optical axis direction of the camera is prioritized, the parallax information of the stereo region REX prioritizes the stereo region REA.

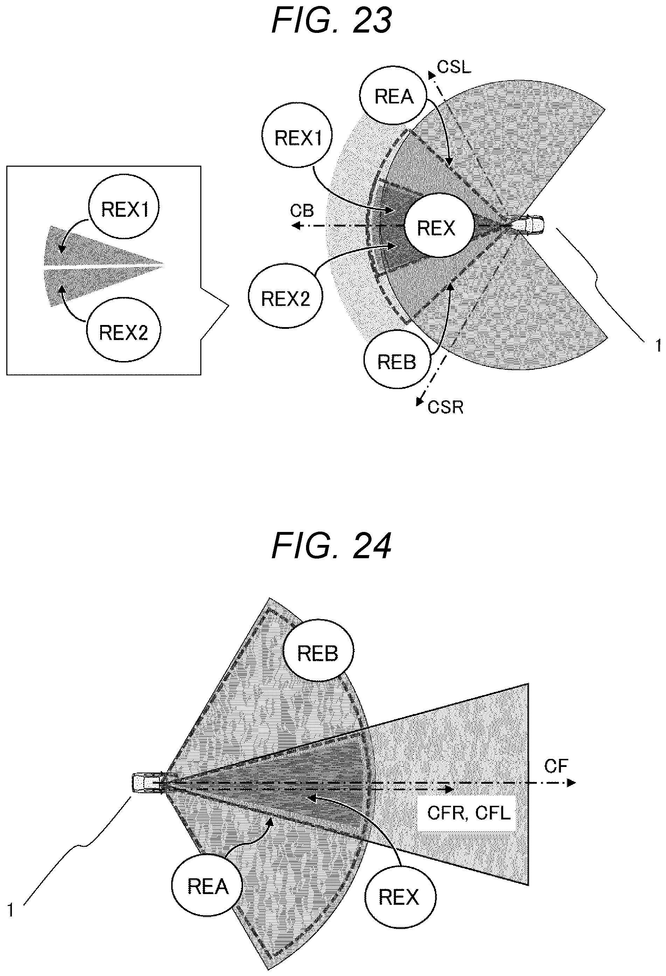

The priority reference 3 will be described in detail with reference to FIG. 23. In this example, the stereo regions REA, REB, and REX are formed by three cameras of the side cameras CSR and CSL, and the rear camera CB. Since the stereo regions REA and REB overlap in the region REX, the region REX is an overlapping stereo region. The stereo region REX is further divided into REX1 and REX2.

First, regarding the stereo region REA, this region is a stereo region of the camera CSL with 8 MP (Mega Pixel) and an angle of view of 150 degrees and the camera CR with 5 MP and an angle of view of 90 degrees. The angular resolution of the camera CSL = 8/150 [Mega pixel/deg], the angular resolution of the camera CB = 5/90 [Mega pixel/deg]. Therefore, the angular resolution of the stereo region REA is 8/150 [Mega pixel/deg], and the optical axis angle difference is 60 degrees.

Next, regarding the stereo region REB, this region is a stereo region of the camera CSR with 8 MP (Mega Pixel) and an angle of view of 150 degrees and the camera CB with 5 MP and an angle of view of 90 degrees. The angular resolution of the camera CSR = 8/150 [Mega pixel/deg], the angular resolution of the camera CR = 5/90 [Mega pixel/deg]. Therefore, the angular resolution of the stereo region REB is 8/150 [Mega pixel/deg], and the optical axis angle difference is 60 degrees.

Meanwhile, the stereo region REX is an overlapping region of the stereo region REA and the stereo region REB. Then, the angular resolution of the stereo region REA is the same as the angular resolution of the stereo region REB. Further, the optical axis angle difference of the stereo region REA is the same as the optical axis angle difference of the stereo region REB. In addition, when the stereo region REX is divided into REX1 and REX2, the angle difference between the center of REX1 and the center of the camera CSL is smaller than the angle difference between the center of REX2 and the center of the camera CSL, and the angle difference between the center of REX1 and the center of the camera CSR is larger than the angle difference between the center of REX2 and the center of the camera CSR. At this time, based on the idea that the parallax information close to the lens center (region having less influence of distortion and chromatic aberration) is prioritized, the parallax information of the overlapping stereo region REX1 prioritizes the stereo region REA, and the parallax information of the overlapping stereo region REX2 prioritizes the stereo region REB.

The priority reference 4 will be described in detail with reference to FIG. 24. In this example, the stereo regions REA and REB are formed by three cameras of the front cameras CFR and CFL, and the front camera CF. Since the stereo regions REA and REB overlap in the region REX, the region REX is an overlapping stereo region.

First, regarding the stereo region REA, this region is a stereo region of the camera CF with 8 MP (Mega Pixel) and an angle of view of 30 degrees and the camera CFL with 8 MP and an angle of view of 120 degrees. The angular resolution of the camera CF = 8/30 [Mega pixel/deg], and the angular resolution of the camera CFL = 8/120 [Mega pixel/deg]. Therefore, the angular resolution of the stereo region REA is 8/120 [Mega pixel/deg], and the optical axis angle difference is 0 degree. Note that the camera CFR can be used instead of the camera CFL.

Next, regarding the stereo region REB, this region is a stereo region of the camera CFL of 8 MP (Mega Pixel) and an angle of view of 120 degrees and the camera CFR of 8 MP and an angle of view of 120 degrees. The angular resolution of the camera CFL = 8/120 [Mega pixel/deg], and the angular resolution of the camera CFR = 8/120 [Mega pixel/deg]. Therefore, the angular resolution of the stereo region REB is 8/120 [Mega pixel/deg], and the optical axis angle difference is 0 degree.

Then, the angular resolution of the stereo region REA is the same as the angular resolution of the stereo region REB. Further, the optical axis angle difference of the stereo region REA is the same as the optical axis angle difference of the stereo region REB. In addition, since the optical axes of the cameras CF, CFR, and CFL are in the same direction, the angle difference between the centers of the overlapping stereo region REX and the cameras CF, CFR, and CFL is equal. Here, there is a high possibility that the camera CF has high angular resolution and can execute highly accurate calibration using a distant white line. That is, the calibration accuracy of the stereo region REA is higher than the calibration accuracy of the stereo region REB. At this time, based on an idea that priority is given to parallax information by a camera pair with high calibration accuracy (reliability) and a camera pair with high stereo matching accuracy (less noise), the parallax information of the overlapping stereo region REX prioritizes the stereo region REA.

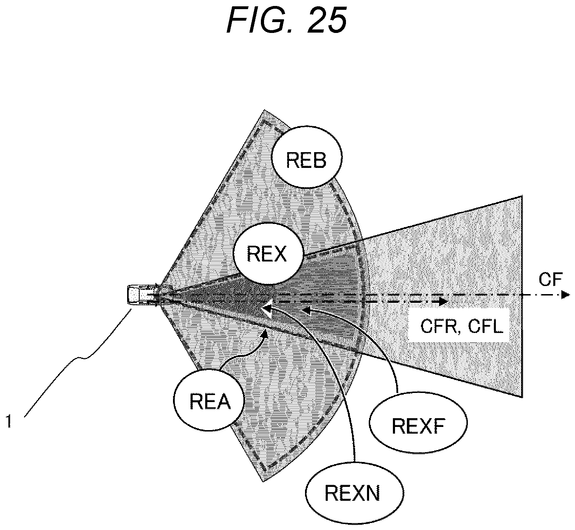

The priority reference 5 will be described in detail with reference to FIG. 25. In this example, the stereo regions REA and REB are formed by three cameras of the front cameras CFR and CFL, and the front camera CF. Since the stereo regions REA and REB overlap in the region REX, the region REX is an overlapping stereo region. Further, the overlapping stereo region REX is divided into a region REXN existing at a distance close to the host vehicle and a region REXF existing at a distance far from the host vehicle.

First, regarding the stereo region REA, this region is a stereo region of the camera CF with 8 MP (Mega Pixel) and an angle of view of 30 degrees and the camera CFL with 8 MP (Mega Pixel) and an angle of view of 120 degrees. A baseline length between the camera CF and the camera CFL is 15 cm. The baseline length refers to a distance between two monocular cameras forming the stereo camera. Note that the camera CFR can be used instead of the camera CFL.

Next, regarding the stereo region REB, this region is a stereo region of the camera CFL with 8 MP (Mega Pixel) and an angle of view of 120 degrees and the camera CFR with 8 MP (Mega Pixel) and an angle of view of 120 degrees. The baseline length between the camera CFL and the camera CFR is 30 cm.

In general, a stereo camera having a long baseline length (for example, about 1 m) has a high distance resolution at a long distance (for example, 100 m or more) and a small error. Meanwhile, at a short distance (for example, 10 m or less), the target object cannot be commonly imaged, that is, the target object may not be included in the stereo region. In addition, the stereo matching is difficult because the appearance of the target object greatly differs between cameras. Therefore, a stereo camera having a long baseline length has a property of being superior in distance measurement at a long distance to distance measurement at a short distance.

On the other hand, a stereo camera with a short baseline length (for example, about 10 cm) has a large distance measurement error because the parallax that can be acquired at a long distance (for example, 100 m or more) is small and the distance resolution is low. Meanwhile, at a short distance (for example, 10 m or less), the target object can be commonly imaged, and the appearance is similar between the cameras, so that stereo matching is possible. Therefore, a stereo camera having a short baseline length has a property of being superior in distance measurement at a short distance to distance measurement at a long distance.

Therefore, based on the idea that the parallax information acquired by the camera pair having the short baseline length in the range of the short distance from the host vehicle is prioritized, the parallax information of the region REXN existing at the distance close to the host vehicle in the overlapping stereo region REX prioritizes the stereo region REA. In addition, in accordance with the idea of prioritizing the parallax information acquired by the camera pair having a long baseline length in a range of a long distance from the host vehicle, the parallax information of the region REXF existing at a distance far from the host vehicle in the overlapping stereo region REX prioritizes the stereo region REB. Note that the long distance or the short distance is not limited to the exemplified distance, and the priority reference 5 can be set on the basis of an arbitrary distance.

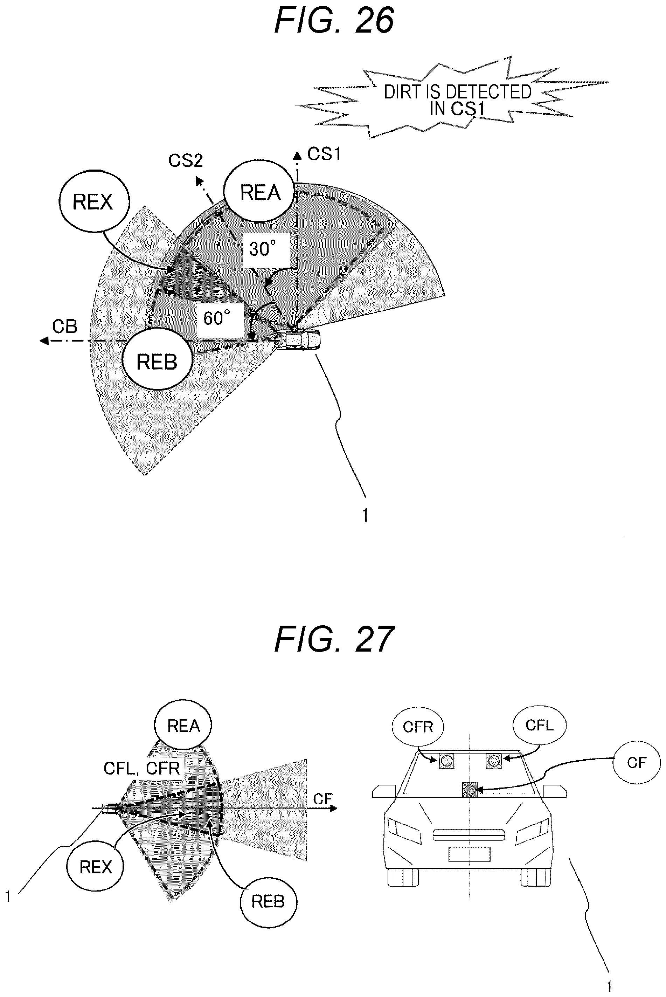

The priority reference 6 will be described in detail with reference to FIG. 26. In this example, stereo vision regions REA and REB are formed by three cameras of the side cameras CS1 and CS2, and the rear camera CB. Since the stereo regions REA and REB overlap in the region REX, the region REX is an overlapping stereo region.

First, regarding the stereo region REA, this region is a stereo region of the camera CS1 having 8 MP (Mega Pixel) and an angle of view of 150 degrees and the camera CS2 having 8 MP and an angle of view of 150 degrees. The angular resolution of the camera CS1 = 8/150 [Mega pixel/deg] and the angular resolution of the camera CS2 = 8/150 [Mega pixel/deg]. Therefore, the angular resolution of the stereo region REA is 8/150 [Mega pixel/deg], and the optical axis angle difference is 30 degrees.

Regarding the stereo region REB, this region is a stereo region of the camera CB having 5 MP (Mega Pixel) and an angle of view of 90 degrees and the camera CS2 having 8 MP and an angle of view of 150 degrees. The angular resolution of the camera CB = 5/90 [Mega pixel/deg], and the angular resolution of the camera CS2 = 8/150 [Mega pixel/deg]. Therefore, the angular resolution of the stereo region REB is 8/150 [Mega pixel/deg], and the optical axis angle difference is 60 degrees.

Then, the angular resolution of the stereo region REA is the same as the angular resolution of the stereo region REB. Further, the optical axis angle difference of the stereo region REA is smaller than the optical axis angle difference of the stereo region REB. Here, since dirt is detected in the camera CS1, the visibility is deteriorated, and the visibility of the camera CS1 is inferior to the visibility of the camera CS2 and the visibility of the camera CB. At this time, on the basis of the idea of prioritizing the parallax information of the camera with less lens contamination and the camera with no defect, the parallax information of the overlapping stereo region REX prioritizes the stereo region REB.

The main priority reference are as described above, but it is preferable to consider the relationship of FIG. 27 in addition to this. In this example, as the vehicle front camera, an overlapping stereo region REX is formed by three cameras of the front camera CF with a narrow angle, and right and left front cameras CFR and CFL.

First, the stereo region REA is a stereo region imaged by a horizontal baseline length stereo camera (pair of cameras CFR and CFL), and has high accuracy of vertical edge parallax. Meanwhile, the stereo region REB is a stereo region imaged by a vertical baseline length stereo camera (pair of the camera CF and the camera CFR or CFL), and has high accuracy in parallax of a horizontal edge.

For this reason, as the parallax information of the overlapping stereo region REX, it is preferable to generate dense parallax information by integrating the vertical edge parallax of the stereo region REA and the horizontal edge parallax of the stereo region REB. That is, when stereo regions having different baseline length directions overlap, dense parallax information can be generated by integrating the parallax information. In addition, in the integration of the parallax information, any parallax information may be weighted and then integrated.

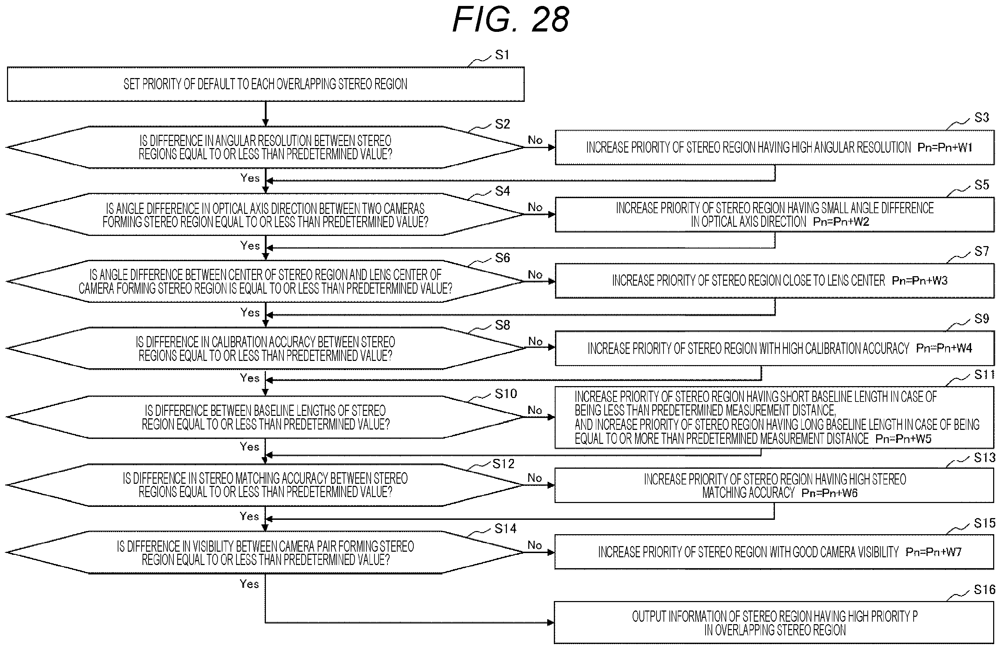

FIG. 28 is a diagram illustrating processing content of the stereo matching priority determination unit 15 in FIGS. 18 and 19. Here, priority is set for each of the stereo regions for which the overlapping stereo regions are generated. As the priority, a weight W (W1 to W7 in the example of FIG. 20) is defined for the priority reference illustrated in FIG. 28, and the weight set in the condition is added each time the condition is satisfied. Finally, one with a large weight is selected.

In the flow of FIG. 28, all the stereo regions for generating the overlapping stereo regions are input, and these are sequentially extracted, and the subsequent determination and weight addition processing are performed. In addition, as a premise of subsequent processing, in processing step S1, a weight W in a case of corresponding to each determination matter of the priority reference is set for each determination matter. The value of the weight may be appropriately set.

In processing step S2, it is confirmed whether or not the difference in angular resolution between the respective stereo regions is equal to or less than a predetermined value. In a case where the difference in angular resolution is not equal to or less than the predetermined value, in processing step S3, the priority of the stereo region having high angular resolution is increased (weight w1 is added).

In processing step S4, it is confirmed whether or not the angle difference in the optical axis direction between the two cameras forming each stereo region is equal to or less than a predetermined value, and in a case where the angle difference in the optical axis direction is not equal to or less than the predetermined value, the priority of the stereo region having a small angle difference in the optical axis direction is increased in processing step S5 (weight w2 is added).

In processing step S6, it is confirmed whether or not the angle difference between the center of each stereo region and the lens center of at least one camera of the camera pairs forming the stereo region is equal to or less than a predetermined value, and in a case where the angle difference with the lens center is not equal to or less than the predetermined value, the priority of the stereo region close to the lens center is increased in processing step S7 (weight w3 is added).

In processing step S8, it is confirmed whether or not the difference in calibration accuracy between the respective stereo regions is equal to or less than a predetermined value. In a case where the difference in calibration accuracy is not equal to or less than the predetermined value, in processing step S9, the priority of the stereo region with high calibration accuracy is increased (weight w4 is added).

In processing step S10, it is confirmed whether or not the difference between the baseline lengths of the camera pairs forming each stereo region is equal to or less than a predetermined value, and in a case where the difference between the baseline lengths is not equal to or less than the predetermined value, the processing proceeds to processing step S11. In processing step S11, in a case where the overlapping stereo region is less than the predetermined measurement distance, the priority of the stereo region by the camera pair having the short baseline length is increased, and in a case where the overlapping stereo region is equal to or more than the predetermined measurement distance, the priority of the stereo region having the long baseline length is increased (weight w5 is added).

In processing step S12, it is confirmed whether or not the difference in stereo matching accuracy between the respective stereo regions is equal to or less than a predetermined value. In a case where the difference in stereo matching accuracy is not equal to or less than the predetermined value, in processing step S13, the priority of the stereo region having high stereo matching accuracy is increased (weight w6 is added).

In processing step S14, it is confirmed whether or not the difference in visibility between the camera pairs forming each stereo region is equal to or less than a predetermined value, and in a case where the difference in visibility is not equal to or less than the predetermined value, in processing step S15, the priority of the stereo region with good camera visibility is increased (weight w7 is added).

In processing step S16, all the conditions are confirmed for all the stereo regions for which the overlapping stereo regions are to be generated, the total of the given weights is obtained, and the information of the stereo region having the higher priority P is output. According to the priority P, a result obtained by integrating all or part of the information of the stereo region having a high priority P and the information of the stereo region having a low priority P may be output. Note that the flow is not necessarily limited to the flow of executing all the processing steps, and the order of the processing steps may be changed.

Further, the allocation amount of the calculation resources of the stereo matching processing unit 14 and the object recognition unit 17 may be changed according to the priority P, or the priority P may be set according to the traveling direction and the traveling environment of the vehicle 1. For example, when the vehicle 1 travels rearward, the priority P of the rear stereo region may be set higher than the priority P of the other regions, or when the vehicle 1 travels in a region where there is a high risk that a falling object exists far away, the priority P of the far region may be set higher than the priority P of the near region. As a result, it is possible to appropriately set an important region whose priority should be increased according to the traveling scene and to improve the accuracy of the parallax information of the important region.

According to the third embodiment, it is possible to ensure high accuracy by determining a combination with which highly accurate parallax information can be obtained for the stereo region in which the overlapping stereo region is generated.

### Fourth Embodiment

In a fourth embodiment, an example of a variation of the camera disposition that can realize the 360-degree multi-stereo camera system will be described. Although description of these details is omitted, disposition according to each purpose is applicable.

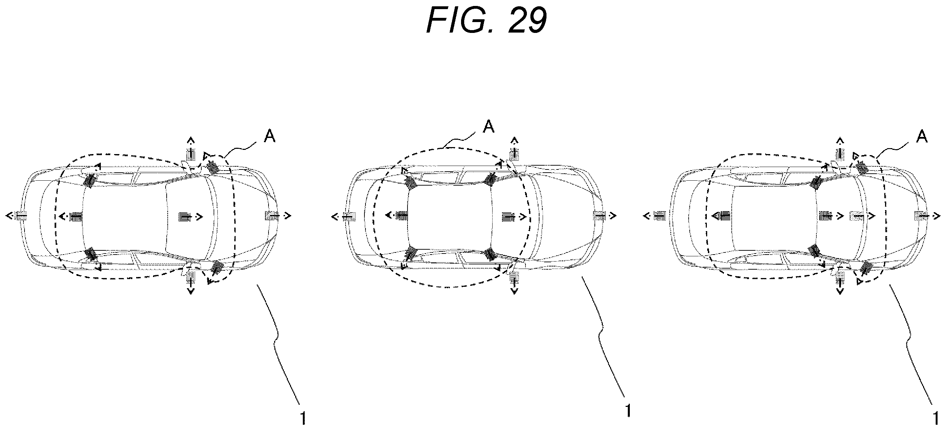

FIG. 29 illustrates a configuration example in which four front, rear, right, and left cameras are added to the camera group A in FIGS. 6, 7, and 10, and the configuration of the camera group A is appropriately changed.

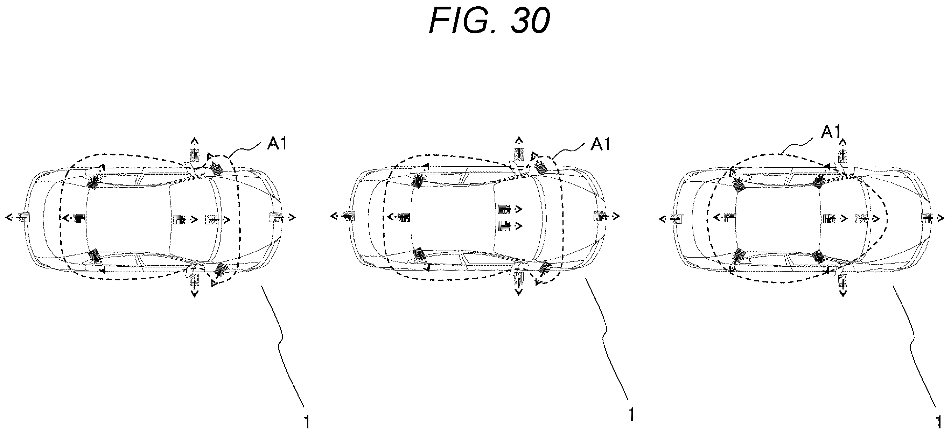

FIG. 30 illustrates a configuration example in which four front, rear, right, and left cameras are added to the camera group A1 in FIGS. 8 and 9, and the configuration of the camera group A1 is appropriately changed.

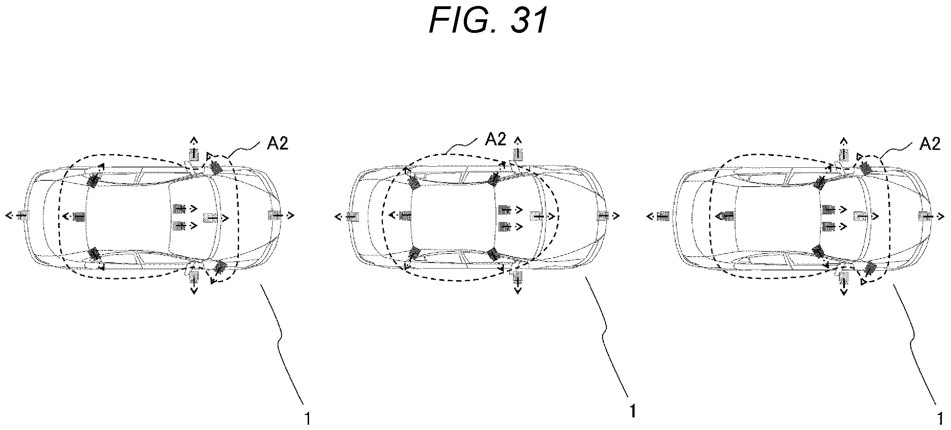

FIG. 31 illustrates a configuration example in which four front, rear, right, and left cameras are added to the camera group A2, and the configuration of the camera group A2 is appropriately changed.

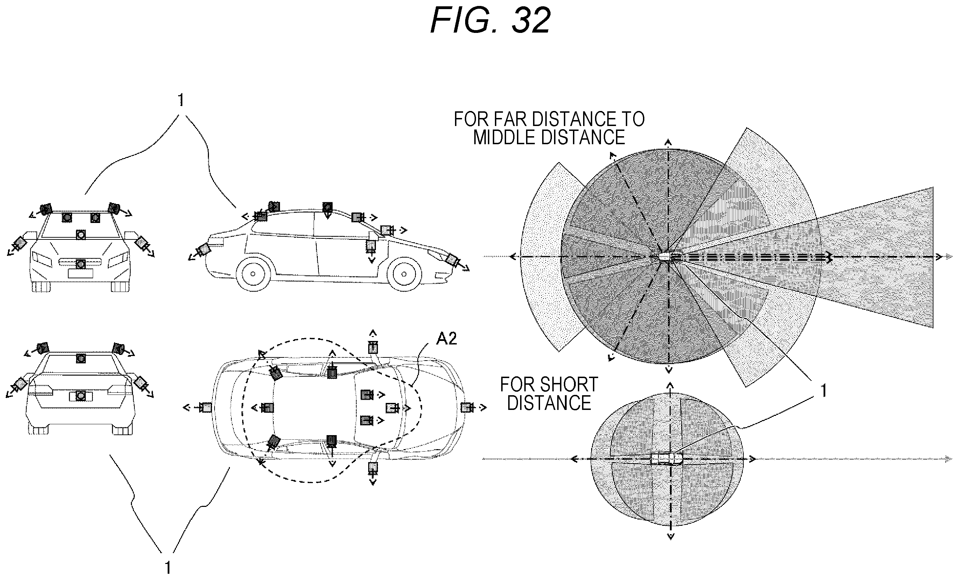

FIG. 32 is a diagram illustrating a four-side camera disposition of the vehicle in a configuration example in which four cameras of front, rear, right, and left are added to the camera group A2. Here, a visual field region for a far-middle distance is secured by the camera group A2, and a short distance is covered by the added four cameras of front, rear, right, and left.

It should be noted that the plurality of cameras are attached to the peripheral edge portion of the vehicle, but are appropriately attached to any position regardless of the inside and outside of the vehicle outline. However, the right and left cameras are preferably attached to the upper portion of the ceiling in order to reduce adhesion of dirt that is rolled up during traveling and to facilitate imaging of distant objects from as high a viewpoint as possible.

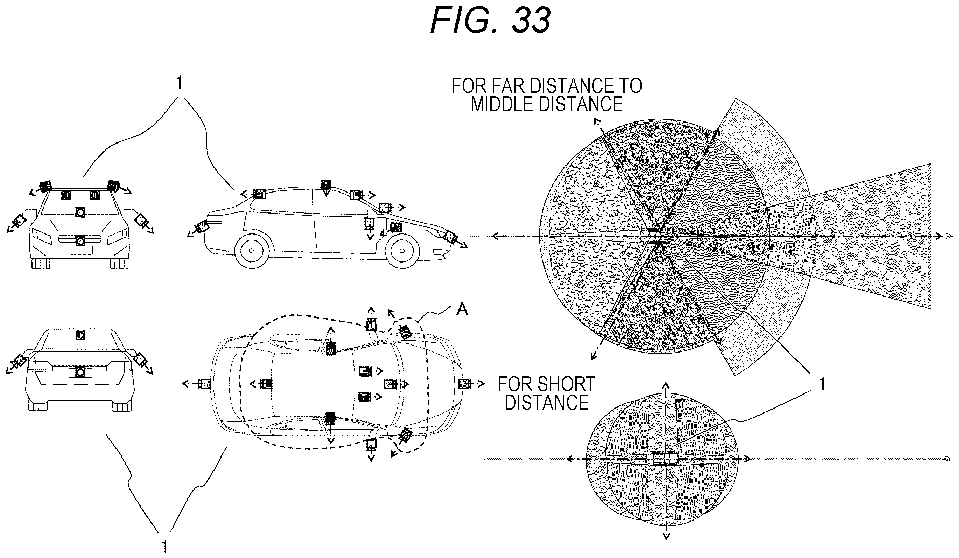

FIG. 33 is a diagram illustrating a four-side camera disposition of the vehicle in a configuration example in which four cameras of front, rear, right, and left are added to the camera group A. Here, a visual field region from a long distance to a middle distance is secured by the camera group A, and a short distance is covered by the added four cameras of front, rear, right, and left.

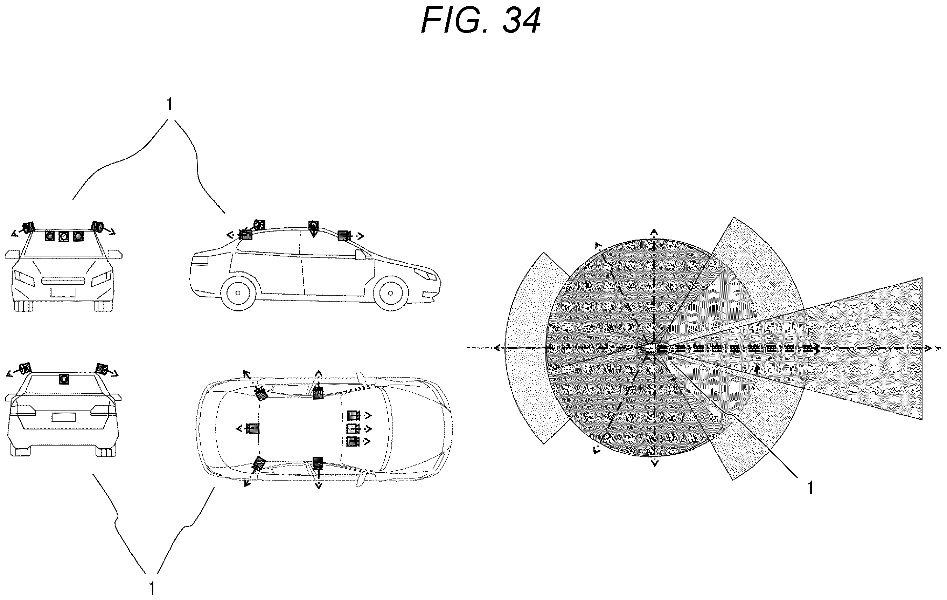

FIG. 34 is a diagram illustrating a four-side camera disposition of the vehicle in the camera group A2. Here, a visual field region from a long distance to a middle distance is secured by the camera group A2.

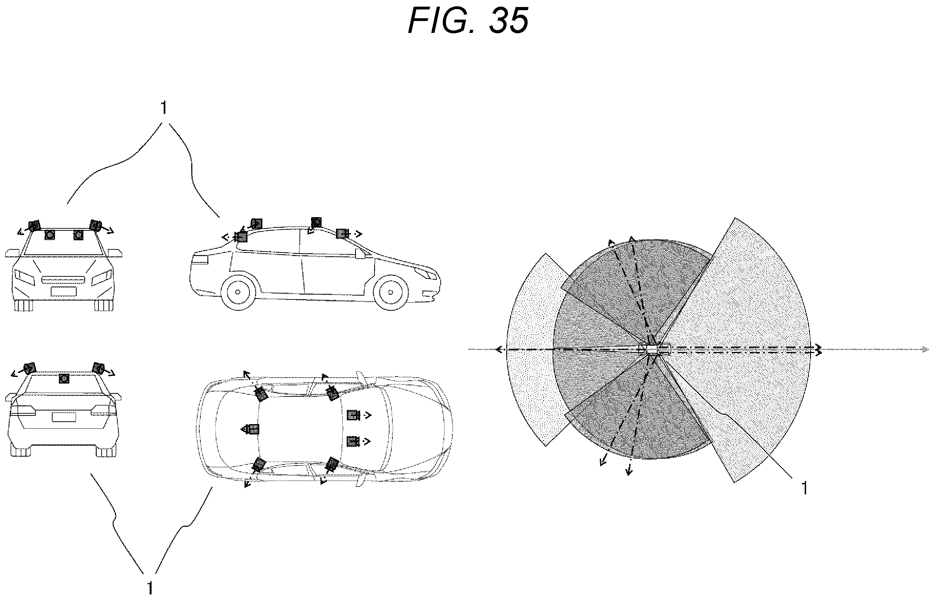

FIG. 35 is a diagram illustrating a four-side camera disposition of the vehicle in the camera group A1. Here, a visual field region from a long distance to a middle distance is secured by the camera group A1.

Note that the present invention is not limited to the above-described embodiments, and includes various modifications. For example, the above-described embodiments have been described in detail for easy understanding of the present invention, and are not necessarily limited to those having all the described configurations. In addition, a part of the configuration of a certain embodiment can be replaced with the configuration of another embodiment, and the configuration of another embodiment can be added to the configuration of a certain embodiment. In addition, it is possible to add**,** delete, and replace other configurations for a part of the configuration of each embodiment.

### Reference Signs List

1 vehicle
10 in-vehicle imaging device
11 camera image acquisition unit
C camera
12 calibration execution unit
13 camera self-diagnosis unit
14 stereo matching processing unit
15 stereo matching priority determination unit
16 parallax information integration unit
17 object recognition unit
18 camera parameter acquisition unit

## Claims

1. A camera system comprising:
a first camera group that includes a plurality of cameras disposed to be capable of imaging an outside of an entire periphery continuous in at least one direction around a host vehicle;
a second camera group that includes the plurality of cameras disposed to be capable of imaging the outside of the entire periphery continuous in at least one direction around the host vehicle, and disposed so as to have a stereo region that is an imaging visual field that overlaps at least an imaging visual field of the first camera group; and
a stereo matching processing unit that performs stereo matching processing to obtain parallax information using images captured by the first camera group and images captured by the second camera group.

2. The camera system according to claim 1, wherein
the first camera group and the second camera group include at least three or more cameras disposed to have a plurality of stereo regions, and
end portions of the plurality of stereo regions are in contact with or intersect with each other.

3. The camera system according to claim 1, wherein the first camera group and the second camera group include at least three or more cameras disposed so as to have a plurality of stereo regions, and are disposed to be capable of imaging the outside of the entire periphery continuous in at least one direction around the host vehicle in the stereo region.

4. The camera system according to claim 2 or 3, wherein
the first camera group includes three monocular cameras that respectively image a front, a left rear, and a right rear of the host vehicle, and
the second camera group includes three monocular cameras that respectively image a left front, a right front, and a rear of the host vehicle.

5. The camera system according to claim 2 or 3, wherein
the first camera group includes three monocular cameras that respectively image a front, a left rear, and a right rear of the host vehicle, and
the second camera group includes four monocular cameras that respectively image the front, a left front, a right front, and a rear of the host vehicle.

6. The camera system according to claim 2 or 3, wherein
the first camera group includes three monocular cameras that respectively image a front, a left rear, and a right rear of the host vehicle, and
the second camera group includes four monocular cameras that respectively image the front, the left rear, the right rear, and a rear of the host vehicle.

7. The camera system according to claim 1, wherein the first camera group and the second camera group include a plurality of monocular cameras.

8. The camera system according to claim 1, wherein the second camera group includes a plurality of cameras having optical axis directions different from optical axis directions of the plurality of cameras of the first camera group.

9. The camera system according to claim 1, wherein the first camera group and the second camera group include a plurality of cameras having different optical axis directions.

10. The camera system according to claim 1, comprising a third camera group provided on front, rear, right, and left of the host vehicle.

11. The camera system according to claim 10, wherein the third camera group is a fisheye camera.

12. The camera system according to claim 10, wherein
the third camera group is disposed so as to have a stereo region that is an imaging visual field overlapping with an imaging visual field of at least one of the first camera group and the second camera group, and
the stereo matching processing unit performs the stereo matching processing using at least one of the images captured by the first camera group or the images captured by the second camera group and images captured by the third camera group.

13. The camera system according to claim 1, wherein among the cameras included in the first camera group and the second camera group, a camera that images at least a left side and a right side of the host vehicle is provided above a ceiling of the host vehicle.

14. The camera system according to claim 1, wherein the cameras included in the first camera group and the second camera group are attached to a peripheral edge portion of the host vehicle.

15. The camera system according to claim 1, wherein the cameras included in the first camera group and the second camera group are disposed such that an overlapping stereo region in which a plurality of stereo regions overlap is formed.

16. The camera system according to claim 15, wherein the overlapping stereo region is formed in front of a vehicle or in rear of the vehicle.

17. The camera system according to claim 15, further comprising a stereo matching priority determination unit that determines from which stereo region among the plurality of stereo regions forming the overlapping stereo region, information to be acquired is prioritized.

18. The camera system according to claim 17, wherein the stereo matching processing unit obtains parallax information of the stereo region determined to have a high priority by the stereo matching priority determination unit.

19. The camera system according to claim 17, wherein the stereo matching priority determination unit determines priority of the plurality of stereo regions for which the stereo matching processing unit has obtained parallax information.

20. The camera system according to claim 17, wherein the stereo matching priority determination unit determines that priority of parallax information from the stereo region by a camera pair having a high angular resolution among the plurality of stereo regions forming the overlapping stereo region is high.

21. The camera system according to claim 17, wherein the stereo matching priority determination unit determines that priority of parallax information from the stereo region by a camera pair having a small angle difference in an optical axis direction of the camera among the plurality of stereo regions forming the overlapping stereo region is high.

22. The camera system according to claim 17, wherein the stereo matching priority determination unit determines that priority of parallax information from the stereo region by a camera pair close to a lens center among the plurality of stereo regions forming the overlapping stereo region is high.

23. The camera system according to claim 17, wherein the stereo matching priority determination unit determines that priority of parallax information from the stereo region by a camera pair having high calibration accuracy among the plurality of stereo regions forming the overlapping stereo region is high.

24. The camera system according to claim 17, wherein the stereo matching priority determination unit determines that priority of parallax information from the stereo region by a camera pair having high stereo matching accuracy among the plurality of stereo regions forming the overlapping stereo region is high.

25. The camera system according to claim 17, wherein in a case where the overlapping stereo region is less than a predetermined measurement distance among the plurality of stereo regions forming the overlapping stereo region, the stereo matching priority determination unit determines that priority of parallax information from the stereo region by a camera pair having a short baseline length is high.

26. The camera system according to claim 17, wherein in a case where the overlapping stereo region is equal to or more than a predetermined measurement distance among the plurality of stereo regions forming the overlapping stereo region, the stereo matching priority determination unit determines that priority of parallax information from the stereo region by a camera pair having a long baseline length is high.

27. The camera system according to claim 17, wherein the stereo matching priority determination unit determines that priority of parallax information from the stereo region by a camera with less lens contamination or a camera pair with less influence of back light among the plurality of stereo regions forming the overlapping stereo region is high.

28. The camera system according to claim 17, wherein the stereo matching priority determination unit determines that priority of parallax information from the stereo region by a camera pair in which a problem does not occur among the plurality of stereo regions forming the overlapping stereo region is high.

29. The camera system according to claim 17, further comprising a parallax information integration unit that integrates parallax information obtained by a plurality of camera pairs in a case where the stereo regions formed by the plurality of camera pairs having different baseline length directions overlap each other.

30. The camera system according to claim 17, wherein in a case where the overlapping stereo region is formed, the stereo matching priority determination unit determines from which stereo region among the plurality of stereo regions, the information to be acquired is prioritized according to at least one of a behavior or a travel environment of the host vehicle.
